# EUROPÄISCHE PATENTSCHRIFT

(11) **EP 3 237 345 B1**
(45) Veröffentlichungstag und Bekanntmachung des Hinweises auf die Patenterteilung: **05.05.2021**
(21) Anmeldenummer: 15819824.2
(22) Anmeldetag: 22.12.2015
(51) Int. Cl.: C03C 10/00, H01B 3/08, C03C 8/24, C03C 3/068

(54) **DURCHFÜHRUNGS- ODER VERBINDUNGSELEMENT MIT VERBESSERTER THERMISCHER BELASTBARKEIT**
LEAD-THROUGH OR CONNECTING ELEMENT WITH IMPROVED THERMAL LOADING CAPABILITY
ÉLÉMENT DE PASSAGE OU DE RACCORDEMENT PRÉSENTANT UNE RÉSISTANCE THERMIQUE AMÉLIORÉE

(30) Priorität: 22.12.2014 DE 102014119372
(43) Veröffentlichungstag der Anmeldung: 01.11.2017
(73) Patentinhaber: SCHOTT AG, 55122 Mainz (DE)
(72) Erfinder: FRITZ, Oliver, 84101 Obersüssbach (DE); MEIER, Georg, 84101 Obersüssbach (DE); FINK, Thomas, 84034 Landshut (DE)
(74) Vertreter: Blumbach · Zinngrebe Patentanwälte PartG mbB
(86) Internationale Anmeldenummer: PCT/EP2015/080976
(87) Internationale Veröffentlichungsnummer: WO 2016/102566

(56) Entgegenhaltungen:
- EP-A1- 2 056 085
- EP-A2- 0 412 655
- US-A- 4 128 697
- US-A- 5 104 755
- US-A1- 2008 118 831

## Beschreibung

Die vorliegende Erfindung betrifft Durchführungs- oder Verbindungselemente im Allgemeinen und Durchführungs- oder Verbindungselemente mit hoher thermischer Belastbarkeit im Besonderen, die insbesondere unter harten Betriebsbedingungen, dies bedeutet im Allgemeinen in rauen Umgebungen mit hohen Betriebs- oder Notfalltemperaturen über 260 °C, verwendet werden können. Vorteilhafte Höchstgrenzen, die mit der Erfindung erreichbar sind, sind etwa 950 °C, insbesondere aber auch 1000 °C, 1100 °C und/oder 1200 °C.

Durchführungs- oder Verbindungselemente sind im Allgemeinen auf dem Gebiet der Technik bekannt und in vielen Vorrichtungen enthalten. Üblicherweise umfassen solche Durchführungs- oder Verbindungselemente einen elektrischen Leiter, der durch ein elektrisch isolierendes Material in einer Durchführungsöffnung befestigt ist. Die Parameter, die die Leistungsfähigkeit solcher Durchführungs- oder Verbindungselemente auszeichnen, sind im Wesentlichen der elektrische Widerstand des isolierenden Materials sowie die Widerstandsfähigkeit gegenüber Wärme und Druck, die tendenziell das isolierende Material und/oder den Leiter veranlassen können, aus der Durchführungsöffnung auszureißen.

Obwohl solche Durchführungs- oder Verbindungselemente eine sehr gut geeignete Technologie darstellen, um z.B. elektrischen Strom durch das Gehäuse von Vorrichtungen zu leiten, schränken die genannten Parameter die möglichen Anwendungsbereiche für Vorrichtungen, die solche Durchführungselemente enthalten, oftmals ein. In der US 5,203,723 A werden Durchführungselemente beschrieben, die aus einem Metallstift hergestellt sind, der von einem Polymermaterial als elektrisch isolierendem Material umgeben ist. Die Geometrie des Polymermaterials, das den elektrischen Leiter umgibt, ist geeignet, durch Vertiefungen und Vorsprüngen wie Schultern höheren Drücken standzuhalten. Die beschriebenen Durchführungselemente werden verwendet, um Verbindungen in einer Sonde eines Erdölbohrungsmessungs- oder Vermessungswerkzeugs herzustellen und können bei Betriebstemperaturen über 260 °C und Drücken von maximal 28.000 psi verwendet werden. Der spezifische Durchgangswiderstand der verwendeten Polymere beträgt ungefähr 8,0 x 10¹⁴ Ω cm und ist damit ausgezeichnet. Die Langzeitstabilität solcher Polymere nimmt jedoch mit der Zeit ab, wenn sie höheren Betriebstemperaturen, elektromagnetischer Strahlung wie UV- oder Gammastrahlung und auch der mechanischen Verschlechterung aufgrund physischer Abrasion ausgesetzt sind.

Es sind auch Durchführungselemente bekannt, die ein anorganisches Material wie Glas als elektrisch isolierendes Material umfassen. US 8,397,638 A beschreibt z.B. eine Durchführungsvorrichtung eines Airbag-Zünders, in dem die Durchführungsöffnung eines Metallträgerkörpers durch ein Glasmaterial abgedichtet ist, das auch einen Stift als elektrischen Leiter hält. Solche Durchführungselemente sind vorgesehen, dem Druck des Explosivstoffs standzuhalten, wenn der Zünder gezündet wird, wobei Drücke von ungefähr 1000 bar, was 14500 psi entspricht, beobachtet werden können. Die elektrischen Eigenschaften des isolierenden Materials sind nicht beschrieben, aber es kann davon ausgegangen werden, dass der spezifische elektrische Durchgangswiderstand des Glasmaterials keine große Rolle spielt, da der Zünder nur einmal mit einem kurzen elektrischen Impuls gezündet und die Vorrichtung dann zerstört wird.

In dem Dokument CA 100 35317 wird eine Abdichtung einer Alkalibatterie mit einer keramischen Manschette beschrieben. Die Keramik ist hierbei gegenüber Alkalien inert und ist mit einer Metalloberfläche über einen Blindverschluss verbunden. Der Blindverschluss wird durch ein glaskeramisches Material gebildet und sowohl mit der keramischen Manschette als auch mit der Metalloberfläche verbunden, so dass eine hermetische Abdichtung der Batterie gewährleistet wird.

Die vorangemeldete, jedoch zu dem für den Zeitrang dieser Anmeldung relevanten Tag noch nicht veröffentlichte Anmeldung DE 10 2014 218 983 der Inhaberin dieser Anmeldung beschreibt ein elektrisch isolierendes Befestigungsmaterial, welches ein Glas sein kann. Glas, so wird in dieser Anmeldung ausgeführt, ist bekannter Weise ein amorphes Material, in dem Kristallite unerwünscht sind. Weil die kristallisierten Bereiche der Glaskeramik üblicherweise einen verschiedenen CTE (Wärmeausdehnungskoeffitient) aufweisen, können die amorphe Glasmatrix, die Konzentration der kristallisierten Bereiche sowie ihr spezifischer CTE verwendet werden, um den Gesamt-CTE des Glaskeramikmaterials anzupassen, In dieser Voranmeldung wird jedoch auch explizit ausgesagt, dass ein amorphes Glasmaterial genauso gut geeignet sei wie das Glaskeramikmaterial und werden Temperaturbereiche von 260 °C sowie 350 °C angegeben.

Häufig sind jedoch größere als die vorstehend erwähnten Temperaturbereiche von Vorteil.

Das Ziel, größere Betriebstemperaturbereiche zur Verfügung zu stellen, wird durch ein Durchführungs- oder Verbindungselement gemäß der vorliegenden Offenbarung und insbesondere auch durch den Gegenstand der unabhängigen Ansprüchen erreicht. Bevorzugte Ausführungsformen ergeben sich aus den davon abhängigen Ansprüchen sowie den Feststellungen in dieser Anmeldung.

Die Erfinder haben herausgefunden, dass eine Kombination eines kristallisierten oder zumindest teilweise kristallisierten Glases mit einer Hochtemperaturlegierung hervorragende CTE-Verhältnisse bereitstellen kann, welche über einen sehr weiten, insbesondere weit über den in der DE 10 2014 218 983 beschriebenen Temperaturbereicht hinausgehenden Betriebstemperaturbereich bereit stellen. Der Begriff zumindest teilweise kristallisiertes Glas umfasst dabei generell ein zumindest teilweise kristallisiertes Material auf Glasbasis. Dieses umfasst sowohl Glaskeramiken, bei denen nach üblichem Verständnis der Kristallanteil im Volumen 50% bis 90% betragen kann, aber auch Materialien, die zu 100% oder nahezu 100% kristallisiert sind, d.h. bei denen der Kristallanteil bis zu 100% oder nahezu 100% im Volumen beträgt.

Insbesondere können die Durchführungs- oder Verbindungselemente der vorliegenden Erfindung auch Betriebs- und/oder Notfalldrücken über 42000 psi standhalten. Daher können sie in zahlreichen Anwendungen verwendet werden, besonders in Reaktoren zur Energieerzeugung, beispielsweise Kernreaktoren, insbesondere innerhalb deren Containments oder als Durchführungen durch deren Containment, sowie Bohrgeräten im Untertage- und/oder Explorationseinsatz sowie zur sicheren Einkapselung von toxischer Materie und in Raumfahrzeugen. Besonders vorteilhaft sind dementsprechend Anwendungen als Durchführungen im Primärkreislauf eines Kernreaktors, beispielsweise Durchführungen durch den Reaktordruckbehälter, insbesondere zur Versorgung der Steuerstäbe mit elektrischem Strom.

Das Durchführungs- oder Verbindungselement wird mit einem Verbund eines eine Hochtemperaturlegierung umfassenden Trägerkörpers, vorzugsweise einem funktionalen Element und einem zumindest teilweise kristallisiertem Glas, wobei das zumindest teilweise kristallisierte Glas vorzugsweise zwischen einem Abschnitt des funktionalen Elements und einem Abschnitt des Trägerkörpers oder innerhalb zumindest eines Abschnitts des Trägerkörpers angeordnet ist, dass der die Hochtemperaturlegierung umfassende Trägerkörper eine Druckspannung von größer oder im Wesentlichen gleich Null bei einer Temperatur von zumindest 20 °C bis mehr als 450 °C auf das zumindest teilweise kristallisierte Glas 3 ausübt. Durch diese Druckspannung wird im Wesentlichen sichergestellt, dass bei Erhöhung der Temperatur zumindest in einem Bereich von zumindest 20 °C bis mehr als 450 °C keine Ablösung des Trägerkörpers von dem zumindest teilweise kristallisierten Glas und vorzugsweise keine Ablösung des zumindest teilweise kristallisierten Glases von dem funktionalen Element erfolgt. Dies kann beispielsweise bei Ausführungsformen, bei welchen zusätzliche Einrichtungen dafür sorgen, dass das funktionale Element mechanisch sicher gehalten ist sehr vorteilhaft sein. Auch wenn weitere Einrichtungen vorhanden sind, mit welchen der Druck, der auf das zumindest teilweise kristallisierte Glas ausgeübt wird, vermindert wird, wie beispielsweise durch weitere, insbesondere druckabschirmende Funktionsgruppen, die an dem Durchführungs- oder Verbindungselement angeordnet sind.

Das Durchführungs- oder Verbindungselement gemäß vorliegender Erfindung bedarf bei besonderen und ebenfalls bevorzugten Ausführungsformen keines zusätzlichen funktionalen Elements, wenn beispielsweise, optische, akustische, und/oder elektromagnetische Signale durch den Körper des zumindest teilweise kristallisierten Glases selbst geführt werden. In einem solchen Falle können bereits bei geeigneter und auf den jeweiligen Anwendungsfall abgestimmten Dicken des zumindest teilweise kristallisierten Glases ausreichend starke Signale, selbst wenn das zumindest teilweise kristallisierte Glas für den Signaltransport dämpfend oder streuend wirkt, durch dieses hindurch geführt werden. So können beispielsweise spektrale Messungen Aufschluss über thermische Verhältnisse oder die Anwesenheit bestimmter chemischer Substanzen liefern. Deren zeitliches Verhalten kann ferner verwendet werden, um beispielsweise Erwärmungen oder auch reaktionskinetische Vorgänge zu erfassen.

Mittels piezoelektrischer Aktoren und/oder Sensoren, welche beispielsweise am zumindest teilweise kristallisierbaren Glas jeweils in axialer Richtung auf beiden Seiten angeordnet sind, können akustische Signale, beispielsweise für unterseeische Anwendungen übertragen werden. Kapazitive und/oder induktive Kopplung ermöglicht darüber hinaus zusätzlich oder alternativ die uni- oder bidirektionale Durchführung komplexer Signalformen, beispielsweise für den Signaltransport bei Steuerungs- und/oder Überwachungsvorgängen.

In Anwendungen mit thermischer Belastung kann eine weitere Kristallisierung des zumindest teilweise kristallisierbaren Glases stattfinden, sodass sich dessen Kristallisationsgrad erhöht, insbesondere auch lokal an besondere temperaturbelasteten Bereichen, weiter erhöht. Hierdurch kann zusätzliche Betriebssicherheit bereitgestellt werden, beispielsweise im Sinne einer Notfallreserve. Eine hierbei im Langzeitbetrieb, von beispielsweise mehreren Wochen bis Jahren einhergehende Änderung der Opazität oder des Streuverhaltens durch zunehmende Kristallisation kann ferner als Maß für die im Langzeitbetrieb erfahrende thermische Belastung dienen.

Es ist ferner vorteilhaft, wenn der die Hochtemperaturlegierung umfassende Trägerkörper eine Druckspannung von größer oder im Wesentlichen gleich Null bevorzugt bei einer Temperatur von zumindest 20 °C bis mehr als 550 °C, bevorzugter bei einer Temperatur von zumindest 20 °C bis mehr als 650 °C und noch bevorzugter bei einer Temperatur von zumindest 10 °C bis mehr als 750° C und am bevorzugtesten bei einer Temperatur von zumindest 10°C bis mehr als 900 °C auf das zumindest teilweise kristallisierte Glas 3 ausübt. Solange diese Druckspannung aufrecht erhalten wird, kann folglich, beispielsweise auch mit den vorstehend angegebenen oder im weiteren Verlauf der Beschreibung angegebenen Maßnahmen, sichergestellt werden, dass das Durchführungs- oder Verbindungselement in diesen Temperaturbereichen hermetisch dicht ist.

Bei einer besonderst bevorzugten Ausführungsform übt der die Hochtemperaturlegierung umfassende Trägerkörper eine Druckspannung von größer oder im Wesentlichen gleich Null bevorzugt bei einer Temperatur von zumindest 10 °C bis zu der Kristallisationstemperatur T_{K} des zumindest teilweise kristallisierten Glases aus, durch die im Wesentlichen dauerhaft sicher gestellt werden kann, dass die Hermetizität des Durchführungs- oder Verbindungselements nicht beeinträchtigt wird. Da die Kristallisationstemperatur bei vielen zumindest teilweise kristallisierbaren Gläsern sehr viel höher liegen kann als beispielsweise Erweichungstemperaturen von herkömmlichen für Druckverglasungen verwendeten Gläsern, lassen sich hierdurch wesentlich höhere Betriebstemperaturen verwirklichen. Vorteilhafte Höchstgrenzen, die mit der Erfindung erreichbar sind, sind etwa 950 °C, insbesondere aber auch 1000 °C, 1100 °C und/oder 1200 °C.

Eine weitere sehr wesentliche Temperatur stellt die Inversionstemperatur dar. Die Inversionstemperatur ist diejenige Temperatur, bei welcher sich bei einer Druckeinglasung die Druckspannung, die das metallische Trägerelement auf das Glasmaterial ausübt, in eine Zugspannung umkehrt. Die Inversionstemperatur ist somit ein Maß für die maximale Betriebstemperatur einer Druckeinglasung, da eine solche nur in einem gewissen geringen Bereich Zugspannungen tolerieren kann, ohne dass die Einglasung beschädigt wird. Die Inversionstemperatur beschreibt somit sozusagen den Schnittpunkt der übereinandergelegten thermischen Ausdehnungskurven des metallischen Trägerelements und des Isolationskörpers aus Glasmaterial.

Für die vorliegende Erfindung hat die Inversionstemperatur die weitere Bedeutung, dass die Inversionstemperatur nicht diejenige Temperatur ist oder sein muss, bei welcher das zumindest teilweise kristallisierbare Glas bei der Herstellung des Durchführungs- und Verbindungselements beginnt, sich an den Trägerkörper des Durchführungs- und Verbindungselements anzuschmiegen und an diesem anzuschmelzen denn die Kristallisationstemperatur, die auch als Temperatur T_{K} bezeichnet wird, kann von der Temperatur abweichen, bei welcher das zumindest teilweise kristallisierbare oder zumindest teilweise kristallisierte Ausgangsmaterial am Trägerkörper anschmilzt und bei welcher das zumindest teilweise kristallisierbare oder zumindest teilweise kristallisierte Ausgangsmaterial am funktionalen Element anschmilzt.

Unterscheiden sich Kristallisationstemperatur und die Temperatur des Anschmelzens an den Trägerkörper, entspricht die Inversionstemperatur im Wesentlichen der Kristallisationstemperatur. Soweit durch weitere Einrichtungen, wie beispielsweise im nachfolgenden Verlauf der Beschreibung detaillierter angegeben, mechanische Kräfte, welche auf das funktionale Element einwirken können, abgefangen werden, können sogar Betriebstemperaturen bis zur Inversionstemperatur und wie nachfolgend beschrieben sogar bis über diese hinaus verwirklicht werden. Hierbei kann die maximale Betriebstemperatur im Wesentlichen der Inversionstemperatur des Durchführungs- oder Verbindungselements mit einer Abweichung von +/- 20% entsprechen, wobei die Inversionstemperatur auch diejenige Temperatur ist, bei welcher die Druckspannung, welche der Trägerkörper auf das zumindest teilweise kristallisierte Glasmaterial ausübt, den Wert 0 annimmt, und die maximale Betriebstemperatur, beispielsweise bei den bevorzugten zumindest teilweise kristallisierten Gläsern in einem Bereich von mehr als 450°C liegt, insbesondere bis 950 °C, und bevorzugt bis zu 1000 °C oder mehr beträgt, bevorzugter bis zu 1100 °C, besonders bevorzugt bis zu 1200 °C.

Der thermische Ausdehnungskoeffitient CTE_{G} des zumindest teilweise kristallisierten Glases ist bei einer Temperatur von zumindest 20 °C bis mehr als 450 °C, bevorzugt bei einer Temperatur von zumindest 20 °C bis mehr als 550 °C, bevorzugter bei einer Temperatur von zumindest 20 °C bis mehr als 650 °C bei einer Temperatur von zumindest 10 °C bis mehr als 750° C, und bevorzugter bei einer Temperatur von mehr als 900 °C, vorteilhaft bei einer Temperatur von bis zu oder mehr als 950 °C bis auf eine Abweichung von etwa 5 % um einem Faktor F_{CTE}, welcher größer als 1,06 ist, kleiner als der thermische Ausdehnungskoeffizient CTE_{H} generell den thermischen Ausdehnungskoeffitienten des Materials des Trägerkörpers und, falls dieses Material des Trägerkörpers aus einer Hochtemperaturlegierung besteht, den thermischen Ausdehnungskoeffitienten der Hochtemperaturlegierung. Besteht der Trägerkörper aus einer Hochtemperaturlegierung und weiteren Materialien, bezeichnet der thermische Ausdehnungskoeffitient CTE_{H} den sich insgesamt ergebenden thermischen Ausdehnungskoeffitienten des Materials des Trägerkörpers bestehend aus Hochtemperaturlegierung zusammen mit diesen weiteren Materialien. Als Material des Trägerkörpers kann beispielsweise auch keramisches Materia!, auch im Verbund mit einer Hochtemperaturlegierung dienen. Hierbei bezeichnet ferner der thermische Ausdehnungskoeffitient CTE_{G} den Ausdehnungskoeffitienten des jeweils vorliegenden, zumindest teilweise kristallisierten Glases und umfasst somit dessen glasige Phase sowie auch alle zumindest teilweise kristallisierten und kristallisierten Phasen sowie deren Kombination. Der thermische Ausdehnungskoeffitient CTE_{G} kann eine Funktion der Temperatur sein und auch als Funktion des Anteils an Kristalliten in dessen Wert variieren.

Bevorzugt hat der der Faktor F_{CTE} einen Wert, der in einem Bereich von 1,06 bis 3,5 liegt. Dies hat im Sinne der Erfindung vorteilhafter Weise den Effekt, dass die Druckspannung, welche der Trägerkörper auf das zumindest teilweise kristallisierte Glas ausübt, in den genannten Temperaturbereichen insbesondere bis kurz vor die Inversionstemperatur in einer begrenzten Variationsbreite konstant ist. Damit wird das sichere Halten des zumindest teilweise kristallisierten Glases in dem Trägerkörper bis zur maximalen Betriebstemperatur sehr gut sichergestellt.

Überraschend vorteilhaft ist es bei einem Durchführungs- oder Verbindungselement, wenn das zumindest teilweise kristallisierte Glas ein teilweise kristallisiertes Glas ist, das zumindest eine Kristallphase und zumindest eine amorphe Restglasphase mit einer Glastransformationstemperatur Tg aufweist, wobei das Durchführungs- oder Verbindungselement im Betriebszustand und/oder im Störfall Temperaturen ausgesetzt ist, welche größer als Tg sind. Es hat sich gezeigt, dass das teilweise kristallisierte Material überraschender Weise durch die Druckspannung und/oder insbesondere die Umgebungsbedingungen nicht aus dem Trägerkörper herausgedrückt wird und dass die Druckspannung aufrecht erhalten wird. Es wird vermutet dass dies darin begründet ist, dass sich insbesondere der Körper aus dem zumindest teilweise kristallisierten Glas nicht oder nicht wesentlich verformt. Außerdem können chemische Bindungen zwischen dem zumindest teilweise kristallisierten Material und dem Körper, die insbesondere beim Herstellungsprozess, insbesondere beim Einschmelzen, erzeugt werden, zur Druckbeständigkeit beitragen. Hierdurch können Betriebstemperaturbereiche verwirklicht werden, welche erheblich über der Erweichungstemperatur der glasigen Phase des zumindest teilweise kristallisierbaren Glases liegen. Obwohl die glasige Phase des zumindest teilweise kristallisierten Glases in erwarteter Weise wohl keine mechanische Stabilität bereit stellen kann, sind dennoch Festigkeitswerte hierbei zu beobachten, welche vollständig unerwartet waren.

Bei bevorzugten Ausführungsformen des Durchführungs- oder Verbindungselements kann die Temperatur, welcher das Durchführungs- oder Verbindungselement im Betriebszustand und/oder im Störfall ausgesetzt ist mehr als 650 °C betragen, bevorzugt sogar zwischen 700 °C und 1200 °C liegen.

Bei einer besonders bevorzugten Ausführungsform ist das zumindest teilweise kristallisierte Glas ein Glas oder eine Glaskeramik oder ein kristallisiertes Material auf Glasbasis mit einem spezifischen Durchgangswiderstand von mehr als 1,0 x 10¹⁰ Ω cm bei einer Temperatur von 350 °C und das Glas oder die Glaskeramik oder das kristallisierte Material auf Glasbasis enthält in Mol-% auf Oxidbasis:

| | |
|---|---|
| SiO₂ | 25 - 55 |
| B₂O₃ | 0,1 - 15 |
| Al₂O₃ | 0 - 15 |
| MO | 20 - 50 |
| M₂O | 0 - <2, |

wobei MO ausgewählt ist aus der Gruppe bestehend aus, einzeln oder in jeder beliebigen Kombination, MgO und/oder CaO und/oder SrO und/oder BaO, und M₂O ausgewählt ist aus der Gruppe bestehend aus, einzeln oder in jeder beliebigen Kombination, Li₂O und/oder Na₂O und/oder K₂O.

Bei der bevorzugtesten Ausführungsform weist das zumindest teilweise kristallisierte Glas die nachfolgend angegebene Zusammensetzung auf, deren spezifischer Durchgangswiderstand ebenfalls angegeben ist:

| **Zusammensetzung [Mol-%]** | |
|---|---|
| SiO₂ | 38,7 |
| B₂O₃ | 8,9 |
| Al₂O₃ | 1,6 |
| BaO | 0,0 |
| CaO | 36,7 |
| MgO | 6,7 |
| Y₂O₃ | 3,4 |
| ZrO₂ | 4,0 |
| Spezif. Durchgangswiderstand | 3,9 x 10¹¹ |

| | |
|---|---|
| bei 350°C [Ω cm] | |

Alle Werte der vorstehenden Zusammensetzung sind in Mol-% auf Oxidbasis angegeben. Ebenso bevorzugte Variationen entsprechen dieser Zusammensetzung mit einer individuellen Variation der einzelnen Komponenten von +/- 20% berechnet vom Gehalt der entsprechenden Komponente der beschriebenen Ausführungsform.

Ein weiteres bevorzugtes Durchführungs- oder Verbindungselement umfasst einen Verbund mit einem eine Hochtemperaturlegierung umfassenden Trägerkörper, einem funktionalen Element und einem zumindest teilweise kristallisiertem Glas, wobei das zumindest teilweise kristallisierte Glas zwischen einem Abschnitt des funktionalen Elements und einem Abschnitt des Trägerkörpers angeordnet ist und bei welchem dem Trägerkörper eine Befestigungseinrichtung für eine weitere Funktionsgruppe zugeordnet ist.

Wenn am Trägerkörper eine weitere Funktionsgruppe angeordnet ist, wobei die weitere Funktionsgruppe eine Befestigungseinrichtung aufweist, welche der am Trägerkörper angeordneten Befestigungseinrichtung zugeordnet ist, können hierdurch viele vorteilhafte Wirkungen erzielt und Anwendungen realisiert werden. Diese Funktionsgruppe kann beispielhaft druckabschirmende Wirkung für das zumindest teilweise kristallisierte Glas sowie Haltekräfte für das funktionale Element bereitstellen.

Hierzu kann bei dem Durchführungs- oder Verbindungselement die Befestigungseinrichtung der weiteren, am Trägerkörper angeordneten Funktionsgruppe mit der Befestigungseinrichtung des Trägerkörpers stoff- und/oder formschlüssig verbunden sein.

Ferner kann die Befestigungseinrichtung der weiteren, am Trägerkörper angeordneten Funktionsgruppe vorteilhaft mit der Befestigungseinrichtung durch Schweißen, Löten mit einem metallischen Lot, Hartlöten mit einem metallischen Lot, ein Glaslot Schrauben, Rasten, Nieten, Krimpen, thermisches Aufschrumpfen, chemisches Bonden oder ein zwischenliegendes Dichtmittel, insbesondere ein metallisches Dichtmittel verbunden sein.

Bei einer besonders bevorzugten Ausführungsform umfasst die weitere am Trägerkörper angeordnete Funktionsgruppe ein mineralisch isoliertes (MI-)Kabel.

Bei einem besonders bevorzugten Durchführungs- oder Verbindungselement dichtet der die Druckspannung auf das kristallisierte Glas ausübende eine Hochtemperaturlegierung umfassende Trägerkörper die Grenzfläche zwischen Trägerkörper und kristallisiertem Glas hermetisch ab und dichtet die Befestigungseinrichtung die Verbindung zur Funktionsgruppe hermetisch ab.

Wenn bei dem Durchführungs- oder Verbindungselement das funktionale Element zumindest ein lösbar-verbindbares, insbesondere steckverbindbares Element umfasst, welchem ein weiteres, mit diesem verbindbares Element einer weiteren Baugruppe zugeordnet ist, können hierdurch flexibel Durchgangsverbindungen in Form von einander zugeordneten Steckverbindern bereitgestellt werden. Besonders vorteilhaft kann eine solche Ausgestaltung dann sein, wenn das Durchführungs- oder Verbindungselement in einer Erdöl- und/oder Erdgasbohrungs- oder Explorationsvorrichtung, oder in einer Energieerzeugungs- oder Energiespeichervorrichtung mit einem Gehäuse, oder in einer Kapselung einer Energieerzeugungsvorrichtung oder einer Energiespeichervorrichtung oder eines Reaktors oder einer Speichervorrichtung von toxischer und/oder schädlicher Materie, insbesondere als Durchführungseinrichtung innerhalb des Containments eines Reaktors oder Durchführungseinrichtung durch das Containment eines Reaktors, insbesondere eines Kernreaktors, oder in einem Raumfahrzeug oder Raumfahrt-Erkundungsfahrzeug, oder in einem Gehäuse eines Sensors und/oder Aktuators verwendet wird, denn dann kann dessen großer Betriebstemperaturbereich hohe Sicherheit auch bei thermisch schwierigen Umgebungsbedingungen, beispielsweise in sicherheitskritischen oder Notfallsituationen bereitstellen. Dies können beispielsweise Sensoren oder Aktuatoren sein, welche bei Bränden noch funktionstauglich bleiben und hierdurch entsprechende Notmaßnahmen wie definierte Abschaltungen, Einleiten von Löschvorgängen, Aufrechterhaltung und/oder Einleiten der Kühlung oder auch Evakuierungsvorgänge erlauben.

Hierzu ist es besonders vorteilhaft, wenn bei dem Durchführungs- oder Verbindungselement das zumindest eine lösbar-verbindbare, insbesondere steckverbindbare Element und das dem steckverbindbaren Element zugeordnete Element je nach Anwendungsfall eine Verbindung für elektrischen Strom, eine formschlüssige Hohlleiteranordnung als Stecker-Buchse-Anordnung, eine Verbindung für optische Leiter oder eine Fluidverbindung bereitstellen können. Ebenso vorgesehen kann es sein, dass die lösbare Steckverbindung weiterhin mit einer Abzugssicherung versehen ist, welche ein versehentliches Lösen der Verbindung und/oder ein Lösen in den Notfallsituationen unterbindet.

Bei einer bevorzugten Ausführungsform umfasst eine mit zumindest einem Befestigungsabschnitt versehene Funktionsgruppe, wobei dieser Befestigungsabschnitt der Funktionsgruppe dem Befestigungsabschnitt des Durchführungs- oder Verbindungselements zugeordnet ist, ein Element aus der Gruppe, welche Mantel, Leitermantel, Sensor- und Aktorgehäuse enthält, umfasst. Hierdurch ist es möglich, den Einsatzbereicht der erfindungsgemäßen Einrichtungen sehr flexibel zu gestalten und eine Vielzahl technisch vorteilhafter Anwendungen und Verwendungen zu realisieren.

Bei dieser Funktionsgruppe kann das Aktorgehäuse beispielsweise einem linearen und/oder rotatorischen Antrieb für feste und/oder fluide Medien zugeordnet sein. Hierdurch können lineare und rotatorische Antriebe sowie Antriebe für fluide Medien wie Pumpen, Flügelräder, offene Schrauben, wie beispielsweise bei Wasser Pelton- oder bei Heißdampf Gasturbinen aktorisch angesteuert und deren Verhalten sensorisch erfasst werden.

Zur sensorischen Erfassung kann das Sensorgehäuse vorteilhaft einem optischen, elektrischen, insbesondere induktiven, kapazitivem und/oder piezoelektrischen Sensor zugeordnet sein.

Wenn der Leitermantel der Funktionsgruppe eine elektrische, eine elektromagnetische, insbesondere eine einen Hohlwellenleiter umfassende Hochfrequenzverbindung und/oder eine optische Verbindung umgibt oder einen Teil dieser Verbindung definiert, können durch die hierdurch möglich werdenden Verbindungen und Durchführungen prozesstechnisch wichtig Steuerungs- und Regelungsvorgänge im Bereich elektrischer und elektronischer Steuereinrichtungen sowie optoelektronischer Einrichtungen insbesondere auch unter harten Betriebsbedingungen ermöglicht werden.

Eine besonders bevorzugte Ausführungsform ergibt sich, wenn der Mantel oder Leitermantel eine elektrische, eine elektromagnetische, insbesondere eine einen Hohlwellenleiter umfassende Hochfrequenzverbindung umgibt oder einen Teil dieser Verbindung definiert, wobei zwischen dem Stahl umfassenden Leitermantel und dem elektrischen, dem elektromagnetischen oder dem Hohlwellenleiter ein mineralischer Isolierstoff, insbesondere Magnesiumoxid angeordnet sein kann.

Bevorzugt kann der Leiter ein Thermo- oder Heizelement umfassen.

In weiterer Ausgestaltung kann die Funktionsgruppe vorteilhaft einen mechanischen, elektrischen, und/oder elektrochemischen Energiespeicher umfassen.

Insbesondere an Energieerzeugungseinrichtungen, wie beispielsweise an großtechnischen Energieerzeugungseinrichtungen oder an Brennkraftmaschinen, kann die Funktionsgruppe auch Wasserstoffdurchführungen umfassen.

Aufgrund der hohen Betriebstemperaturen, welche durch die Erfindung auf sichere Weise ermöglich werden, können diese Durchführungs- oder Verbindungselemente, derartige Funktionsgruppen oder auch deren Kombinationen sehr vorteilhaft in einer Erdöl- und/oder Erdgasbohrungs- oder Explorationsvorrichtung oder in einer Energieerzeugungs- oder Energiespeichervorrichtung mit einem Gehäuse oder in einer Kapselung einer Energieerzeugungsvorrichtung oder einer Energiespeichervorrichtung eines Reaktors oder einer Speichervorrichtung von toxischer und/oder schädlicher Materie, oder in einem Raumfahrzeug oder Raumfahrt-Erkundungsfahrzeug, oder in einem Gehäuse eines Sensors und/oder Aktuators verwendet werden.

Vorteilhaft kann ein Verfahren zum Herstellen eines Durchführungs- oder Verbindungselements die nachfolgend aufgeführten Verfahrensschritte umfassen
- Bereitstellen eines zumindest teilweise kristallisierbaren Ausgangsmaterials, insbesondere eines zumindest teilweise kristallisierbaren oder teilweise kristallisierten Glases,
- Bereitstellen eines Trägerkörpers, welcher ein Innenvolumen definiert, innerhalb dessen Raum für die Aufnahme weiterer Bestandteile des Durchführungs- oder Verbindungselements bereitgestellt ist,
- Anordnen des zumindest teilweise kristallisierbaren Ausgangsmaterials innerhalb zumindest eines Abschnitts des Trägerkörpers, wobei dieser zumindest eine Abschnitt des Trägerkörpers innerhalb des Innenvolumens des Trägerkörpers angeordnet ist,
- vorzugsweise Bereitstellen eines funktionalen Elements
- vorzugsweise Anordnen des funktionalen Elements, so dass zumindest ein Abschnitt des funktionalen Elements von dem zumindest teilweise kristallisierbaren Ausgangsmaterial umgeben ist, wobei die Anordnung aus zumindest teilweise kristallisierbarem Ausgangsmaterial und vorzugsweise funktionalem Element zumindest mit einem Abschnitt innerhalb des Innenvolumens des Trägerkörpers angeordnet ist, oder
- wobei die Anordnung aus zumindest teilweise kristallisierbarem Ausgangsmaterial zumindest mit einem Abschnitt innerhalb des Innenvolumens des Trägerkörpers angeordnet ist,
- Erwärmen der Anordnung aus Trägerkörper, zumindest teilweise kristallisierbarem Ausgangsmaterial und vorzugsweise funktionalem Element, wobei das Erwärmen bis zu einer Temperatur durchgeführt wird, bei welcher das zumindest teilweise kristallisierbare Ausgangsmaterial formschlüssig an zumindest einem Abschnitt des Trägerkörpers anliegt und am Trägerkörper anschmilzt und bei welcher das zumindest teilweise kristallisierbare Ausgangsmaterial vorzugsweise formschlüssig an zumindest einem Abschnitt des funktionalen Elements anliegt und vorzugsweise am funktionalen Element anschmilzt,
- vorzugsweise Einstellen einer Temperatur der Anordnung aus Trägerkörper, zumindest teilweise kristallisierbarem Ausgangsmaterial und vorzugsweise funktionalem Element, bei welcher das zumindest teilweise kristallisierbare Ausgangsmaterial zumindest teilweise kristallisiert wird,
- Abkühlen der Anordnung aus Trägerkörper, zumindest teilweise kristallisierbarem Ausgangsmaterial und funktionalem Element.

Die Kristallisation des zumindest teilweise kristallisierbaren Ausgangsmaterials wird dabei insbesondere durch die Temperaturführung bestimmt. Es handelt sich dabei besonders bevorzugt um ein selbstkristallisierendes Material. D.h. für das Auslösen der Kristallisation ist die Zugabe weiterer Substanzen wie z.B. Füllstoffen als Kristallisationskeime nicht notwendig.

Bei einem derartigen Verfahren kann sehr vorteilhaft bei der Anordnung aus Trägerkörper, zumindest teilweise kristallisierbarem Ausgangsmaterial und funktionalem Element bei einer anderen Temperatur als bei derjenigen, bei welcher das kristallisierbare Glas vorzugsweise sowohl am funktionalen Element als auch am Trägerkörper anschmilzt, jedoch zumindest am Trägerkörper anschmilzt eine zumindest teilweise Kristallisierung vorgenommen werden. Durch diese zumindest teilweise Kristallisierung kann die mechanische Festigkeit des zumindest teilweise kristallisierten Glases in vielen Fällen wesentlich verbessert werden. Durch die Wahl der Kristallisationstemperatur Tk unabhängig von der vorstehend erwähnten Anschmelztemperatur, welche in der Literatur auch manchmal als Sphärischtemperatur bezeichnet wird, kann die Kristallisation oder zumindest teilweise Kristallisation beispielsweise bei höheren Temperaturen in kürzerer Zeit durchgeführt werden, welches regelmäßig auch zu höheren Inversionstemperaturen führt.

Es ist auch möglich, die zumindest teilweise Kristallisation bei niedrigeren Temperaturen als der Anschmelztemperatur durchzuführen, wenn beispielsweise niedrigere Inversionstemperaturen erzielt werden sollen.

Ferner ist es auch möglich, dass das verfahrensgemäß verwendete Ausgangsmaterial schon eine zumindest teilweise Kristallisierung aufweist, solange der verbleibende glasige Anteil ausreicht, damit bei entsprechender verfahrensgemäßer Erwärmung das zumindest teilweise kristallisierbare und teilweise kristallisierte Ausgangsmaterial formschlüssig an zumindest einem Abschnitt des Trägerkörpers anliegt und am Trägerkörper anschmilzt und das zumindest teilweise kristallisierbare und teilweise kristallisierte Ausgangsmaterial vorzugsweise formschlüssig an zumindest einem Abschnitt des funktionalen Elements anliegt und vorzugsweise am funktionalen Element anschmilzt.

Bei geeigneten Materialkombinationen für das zumindest teilweise kristallisierte Glas, vorzugsweise das funktionale Element sowie den Trägerkörper kann sich die Betriebstemperatur sogar bis über die Inversionstemperatur hinaus erstrecken, wenn beispielsweise durch die Anhaftung des zumindest teilweise kristallisierten Glases vorzugsweise am funktionalen Element sowie am Trägerkörper, zumindest jedoch am Trägerkörper, Zugspannungen zwischen diesen Elementen möglich sind, ohne dass es zu Ablösungen des zumindest teilweise kristallisierten Glases vom, soweit vorhanden funktionalen Element sowie vom Trägerkörper kommt. Diese Betriebstemperaturen können durchaus bis zu 20 % über der in Kelvin gemessenen Inversionstemperatur liegen. Außer dieser Temperaturangabe in Kelvin sind ansonsten alle weiteren Temperaturangaben der Beschreibung und der Ansprüche in Celsius-Werten angegeben.

Vorteilhaft wird ferner bei zunehmender Kristallisierung der thermische Ausdehnungskoeffitient des zumindest teilweise kristallisierten Glases CTE_{G} sowie dessen auch über die Kristallisationstemperatur Tk hinaus in einem weiteren Temperaturbereich konstant bleiben.

Vorteilhaft beträgt bei einem Verfahren zum Herstellen eines Durchführungs- oder Verbindungselements die Temperatur T_{K} mehr als 450 °C, bevorzugt mehr als 550 °C, bevorzugter mehr als 650 °C und noch bevorzugter mehr als 750° C und bevorzugter mehr als 900 °C, bevorzugter mehr als 950 °C und am bevorzugtesten mehr als 1000 °C. Vorteilhafte Höchstgrenzen, die mit der Erfindung hierdurch für die maximale Betriebstemperatur erreichbar sind, sind etwa 950 °C, insbesondere je nach Wahl des zumindest teilweise kristallisierbaren Glases und vorzugsweise auch der Hochtemperaturlegierung aber auch 1000 °C, 1100 °C und/oder 1200 °C.

Die vorstehend beschriebene äußerst günstige thermische Widerstandsfähigkeit lässt sich mit einem Verfahren zum Herstellen eines Durchführungs- oder Verbindungselements erzielen, bei welchem das zumindest teilweise kristallisierte Glas ein Glas oder eine Glaskeramik oder ein kristallisiertes Material auf Glasbasis mit einem spezifischen Durchgangswiderstand von mehr als 1,0 x 10¹⁰ Ω cm bei einer Temperatur von 350 °C umfasst und das Glas oder die Glaskeramik oder das kristallisierte Material auf Glasbasis in Mol-% auf Oxidbasis enthält:

| | |
|---|---|
| SiO₂ | 25 - 55 |
| B₂O₃ | 0,1 - 15 |
| Al₂O₃ | 0 - 15 |
| MO | 20 - 50 |
| M₂O | 0 - <2, |

wobei MO ausgewählt ist aus der Gruppe bestehend aus, einzeln oder in jeder beliebigen Kombination, MgO und/oder CaO und/oder SrO und/oder BaO, und M₂O ausgewählt ist aus der Gruppe bestehend aus, einzeln oder in jeder beliebigen Kombination, Li₂O und/oder Na₂O und/oder K₂O.

Wenn bei einem derartigen Verfahren zum Herstellen eines Durchführungs- oder Verbindungselements der Trägerkörper eine metallische Hochtemperaturlegierung mit einem thermischen Ausdehnungskoeffitienten CTE_{H} umfasst, welcher in einem Bereich von 10 °C bis zumindest zur Temperatur T_{K} größer als der thermische Ausdehnungskoeffitienten des zumindest teilweise kristallisierten Glases CTE_{G} ist, lassen sich hierdurch in diesem Temperaturbereich sicher Druckspannungen, die größer oder zumindest gleich Null sind aufrecht erhalten.

Je nach Wahl des zumindest teilweise kristallisierten Ausgangsglases kann während des Abkühlens der Anordnung aus Trägerkörper, glasigem, zumindest teilweise kristallisierbarem oder zumindest teilweise kristallisiertem Ausgangsmaterial und vorzugsweise auch funktionalem Element der Trägerkörper eine Druckspannung von größer oder im Wesentlichen gleich Null bei einer Temperatur von zumindest 20 °C bis mehr als 450 °C, bevorzugt bei einer Temperatur von zumindest 20 °C bis mehr als 550 °C, bevorzugter bei einer Temperatur von zumindest 20 °C bis mehr als 650 °C und noch bevorzugter bei einer Temperatur von zumindest 10 °C bis mehr als 750° C und am bevorzugtesten bei einer Temperatur von zumindest 10°C bis mehr als 900 °C bei den bevorzugten zumindest teilweise kristallisierten Gläsern in einem Bereich von mehr als 450°C liegt, insbesondere bis 950 °C, und bevorzugt bis zu 1000 °C oder mehr beträgt, bevorzugt bis zu 1100 °C, besonders bevorzugt bis zu 1200 °C liegen, auf das zumindest teilweise kristallisierte Glas 3 ausüben.

Die Erfinder haben erkannt, dass es das erfindungsgemäße Durchführungselement oder Verbindungselement erlaubt, dass die Betriebstemperaturen und/oder Temperaturen des Störfalls auch dauerhaft größer sein können als die Transformationstemperatur Tg der noch vorhandenen amorphen Bereiche der Restglasphase, die bei den am bevorzugtesten verwendeten teilweise kristallisierten Glasmaterialien neben den kristallisierten Bereichen noch vorhanden ist. Wird Tg überschritten, wird das amorphe Material üblicherweise sozusagen weich. Im vorliegenden Fall sind die kristallisierten Bereiche und/oder Kristallphasen allerdings in der Lage, das sozusagen weiche Material so zu stützen, dass es weder durch die Druckspannung, die durch den Trägerkörper auf es ausgeübt wird, noch durch die absehbaren Betriebs- und/oder Störfallbedingungen aus dem Trägerkörper herausgedrückt wird.

In einer besonders vorteilhaften Ausführungsform ist es sogar möglich, bei Betriebs- und/oder Störfalltemperaturen oberhalb von Tg, dass das teilweise kristallisierte Glasmaterial nachkristallisiert, wodurch sich der Anteil der kristallinen Phasen im Gesamtvolumen des zumindest teilweise kristallisierten Glasmaterials erhöht, und das erfindungsgemäße Durchführungselement oder Verbindungselement dadurch während des Betriebs und/oder sogar während des Störfalls verstärkt, insbesondere noch belastbarer wird.

Die Erfindung wird nachfolgend unter Bezugnahme auf die beigeschlossenen Zeichnungen und unter Bezugnahme auf bevorzugte Ausführungsformen detaillierter beschrieben.

Es zeigen:
- Figur 1: eine schematisch dargestellte Querschnittsansicht einer ersten Ausführungsform eines Durchführungs- oder Verbindungselements, bei welchem zwei mit einem metallischen Kabelmantel versehene, mit Mineralstoff isolierte Kabel (MI-Kabel) mittels eines Durchführungs- oder Verbindungselements miteinander verbunden sind,
- Figur 2: eine Darstellung des thermischen Ausdehnungs-Koeffitienten CTE als Funktion der Temperatur für verschiedene Metalle, metallische Legierungen, insbesondere metallische Hochtemperaturlegierungen und für ein kristallisierbares bzw. kristallisiertes Glas entsprechend der Erfindung,
- Figur 3: eine schematisch dargestellte Querschnittsansicht einer herkömmlichen Druckglasdurchführung mit einem Trägerkörper, in welchem ein ein Durchführungselement umgebendes Glas gehalten ist,
- Figur 4: ein Diagramm, welches die relative thermische Ausdehnung eines Glases sowie von Stahl als Funktion der Temperatur zeigt, mit einer Darstellung der sich aus diesen relativen thermischen Ausdehnungen ergebenden Druckspannungen als Funktion der Temperatur,
- Figur 5: ein Diagramm, welches den thermischen Ausdehnungskoeffitienten CTE_{G} des entsprechend der Erfindung bevorzugten zumindest teilweise kristallisierbaren bzw. zumindest teilweise kristallisierten Glases sowie den thermischen Ausdehnungskoeffitienten CTE_{H} der metallischen Hochtemperaturlegierung Inconel 690 mit dessen tatsächlichen und mit um einen Betrag CTE_{K} verschobenen Werten, jeweils als Funktion der Temperatur zeigt,
- Figur 6: eine stark vereinfacht schematisch dargestellte Querschnittsansicht einer zweiten Ausführungsform eines Durchführungs- oder Verbindungselements, mit einem buchsenförmigen Steckverbinder, bei welchem ein mineralisch isoliertes Kabel an das Durchführungs- oder Verbindungselement angeschlossen ist,
- Figur 7: eine stark vereinfacht schematisch dargestellte Querschnittsansicht einer dritten Ausführungsform eines Durchführungs- oder Verbindungselements, mit einer mit dem Durchführungs- oder Verbindungselement stoff- und/oder formschlüssig hermetisch dicht verbunden Funktionsgruppe,
- Figur 8: eine stark vereinfacht schematisch dargestellte Querschnittsansicht einer vierten Ausführungsform eines Durchführungs- oder Verbindungselements, welches in einem Containment vorzugsweise hermetisch dicht gehalten ist, mit einem buchsenförmigen Steckverbinder, bei welchem ein mineralisch isoliertes Kabel an das Durchführungs- oder Verbindungselement angeschlossen ist,
- Figur 9: eine stark vereinfacht schematisch dargestellte Querschnittsansicht einer fünften Ausführungsform eines Durchführungs- oder Verbindungselements, bei welchem das funktionale Element des Durchführungs- oder Verbindungselements eine Durchführung für eine Fluidverbindung aufweist
- Figur 10: eine stark vereinfacht schematisch dargestellte Querschnittsansicht einer sechsten Ausführungsform eines Durchführungs- oder Verbindungselements, welches in einem Containment vorzugsweise hermetisch dicht gehalten ist, mit einem buchsenförmigen Steckverbinder, bei welchem sowohl die Messelektronik als auch ein innerhalb des Containments angeordneter Sensor eines Messgeräts an das Durchführungs- oder Verbindungselement angeschlossen ist
- Figur 11: eine stark vereinfacht schematisch dargestellte Querschnittsansicht einer Energieerzeugungsvorrichtung mit einem Gehäuse und einer Kapselung, die beide ein Durchführungs- oder Verbindungselement gemäß einer der bevorzugten erfindungsgemäßen Ausführungsformen umfassen.

Bei der nachfolgenden detaillierten Beschreibung der Erfindung soll der Begriff des zumindest teilweise kristallisierbaren oder zumindest teilweise kristallisierten Glases ein Glas umfassen, welches durch thermische Einwirkungen aus einer glasigen Phase in eine Phase überführt werden kann, in welcher zusätzlich zur glasigen Phase oder auch nahezu vollständig eine kristallisierte Phase vorliegt. Insbesondere soll dieser Begriff auch Glaskeramiken umfassen, welche noch nicht, nur teilweise oder auch vollständig kristallisiert sind.

Bei der nachfolgenden Beschreibung bezeichnen in den verschiedenen Ausführungsformen numerisch gleiche Bezugszeichen jeweils gleiche funktionale Elemente oder Bestandteile. Soweit nichts Gegenteiliges ausgesagt ist, gelten alle Angaben, insbesondere auch zu den jeweils verwendeten Materialien in gleicher Weise für Bestandteile mit gleichen Bezugszeichen für alle beschriebenen Ausführungsformen.

Lediglich um der Klarheit und um des besseren Verständnis Willen sind sämtliche Figuren nicht maßstabsgerecht dargestellt.

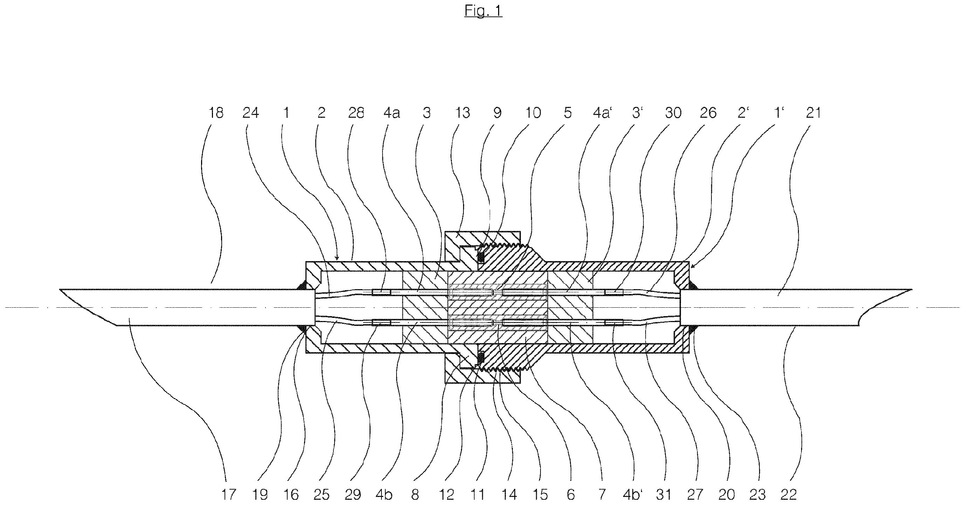

Nachfolgend wird auf Figur 1 Bezug genommen, in welcher eine Querschnittsansicht einer ersten Ausführungsform eines Durchführungs- oder Verbindungselements gezeigt ist, welches in dieser Ausführungsform zwei Verbindungselemente umfasst, die jeweils insgesamt das Bezugszeichen 1 beziehungsweise 1' tragen.

Der im Wesentlichen zylindrische Trägerkörper 2 und 2'des jeweiligen Verbindungselements 1, 1' umgibt jeweils ein in diesen eingeschmolzenes oder an diesem angeschmolzenes, zumindest teilweise kristallisierbares oder zumindest teilweise kristallisiertes Glas 3 und 3', in welchem wiederum jeweils zwei funktionale Elemente 4a, 4b beziehungsweise 4a', 4b' gehalten sind. Die funktionalen Elemente 4a, 4b und 4a', 4b' definieren bei dieser Ausführungsform Steckkontakte, welche jeweils im Eingriff mit metallischen Kontaktbuchsen 5 und 6 stehen.

In weiteren, in den Figuren nicht dargestellten Ausführungsformen können die funktionalen Elemente 4, 4a, 4b und 4a', 4b', 34 auch jeweils durch das zumindest teilweise kristallisierbare Glas 3, 3' funktional gebildet oder auch durch dieses ersetzt werden und sind nicht als zusätzliches körperliches Element sondern durch das zumindest teilweise kristallisierbare Glas 3, 3' selbst bereitgestellt.

Aus den beiliegenden Figuren sowie aus der weiteren Offenbarung dieser Erfindung entnimmt ein Fachmann auf dem vorliegenden technischen Gebiet, wie ein derart geändertes funktionales Element zu realisieren ist, beispielsweise mit auf in achsialer Richtung beiden Seiten des kristallsierbaren Glases angeordnete Sensoren und/oder Aktoren.

Die Trägerkörper 2, 2' bestehen bei dieser Ausführungsform jeweils ohne Beschränkung der Allgemeinheit aus einer warmfesten metallischen Legierung, beziehungsweise einer metallischen Hochtemperaturlegierung, wie beispielsweise Inconel 750.

Weitere Ausführungsformen können jedoch, jeweils auf den Anwendungs- und Einsatzfall bezogen, bei dem Material des Trägerkörpers auch ohne Hochtemperaturlegierungen auskommen soweit der thermische Einsatzbereich des jeweiligen Materials den herrschenden Betriebsbedingungen gerecht wird.

Die funktionalen Elemente 4a, 4b und 4a', 4b' bestehen, ohne Beschränkung der Allgemeinheit im Wesentlichen aus einer NiFe-Legierung oder CF25, einer FeCo-Legierung, welche, wie nachfolgend detaillierter beschrieben wird, jeweils in dem zumindest teilweise kristallisierten Glas 3, 3' eingebettet, bzw. in diesem eingeschmolzen sind. Auf diese Weise ist jeweils das zumindest teilweise kristallisierte Glas 3, 3' zwischen einem Abschnitt des funktionalen Elements 4a, 4b und 4a', 4b' und einem Abschnitt des Trägerkörpers 2, 2'angeordent.

Die Kontaktbuchsen 5, 6 können im Wesentlichen aus dem gleichen Material wie die funktionalen Elemente 4a, 4b und 4a', 4b' bestehen, somit im Wesentlichen ebenfalls aus einer NiFe-Legierung bzw. CF25, einer FeCo-Legierung und sind in einem isolierenden im Wesentlichen zylindrischen Träger 7 gehalten, der zwischen den beiden Verbindungselementen 1, 1' in einem von diesen definiertem Hohlraum angeordnet ist. Der im Wesentlichen zylindrische Träger 7 umfasst oder besteht aus einer temperaturfesten Keramik oder dem zumindest teilweise kristallisiertem Glas 3.

Der Trägerköper 2 weist an seinem dem Trägerkörper 2'zugewandten Ende eine radiale Erweiterung in Form einer Ringschulter 8 auf, an deren stirnseitiger Flanschfläche 9 eine metallische Hochtemperaturdichtung 10, welche beispielsweise als gasgefüllte Ringrohrdichtung oder als einkristalline Metalldichtung ausgebildet sein kann, anliegt.

Die metallische Hochtemperaturdichtung 10 ist von einer Ringnut 11 gehalten, die in der radial erweiterten Stirnfläche 12 des Trägerkörpers 1' ausgebildet ist.

Die Überwurfmutter 13 liegt an der Ringschulter 12 des Trägerkörpers 1 an und weist ein Innengewinde 14 auf, welches mit dem Außengewinde 15 der radialen Erweiterung des Trägerkörpers 1' im Eingriff steht. Durch die Gewinde 14 und 15 sind beide Trägerkörper 1 und 1' mechanisch fest aneinander gehalten und wird die Hochtemperaturdichtung 10 mit einer Kraft beaufschlagt, welche sicherstellt, dass hierdurch eine dauerbetriebsfeste hermetische Dichtung zwischen den Trägerkörpern 1 und 1' erzeugt wird.

Hierdurch wird eine lösbar-verbindbare, insbesondere mit einem als steckverbindbaren Element ausgebildetem funktionalen Element bereitgestellt.

An dem in Figur 1 linksseitigen oder bodenseitigen Ende des Trägerkörpers 1 ist eine Durchgangsöffnung 16 ausgebildet, in welche der vorzugsweise aus Stahl oder einer Stahllegierung bestehende Kabelmantel 17 eines hochtemperaturfesten mineralisch, vorzugsweise mit Magnesiumoxid isolierten Kabels (MI-Kabels) 18 hineinragt. Das mineralisch isolierte Kabel 18 ist mittels einer Schweiß- oder Hartlötverbindung 19 hermetisch dauerbtriebsfest dicht und mechanisch fest am Trägerkörper 1 angeordnet.

An dem in Figur 1 rechtsseitigen oder bodenseitigen Ende des Trägerkörpers 2' ist eine Durchgangsöffnung 20 ausgebildet, in welche der vorzugsweise aus Stahl oder einer Stahllegierung bestehende Kabelmantel 21 eines hochtemperaturfesten mineralisch, vorzugsweise mit Magnesiumoxid isolierten Kabels (MI-Kabels) 22 hineinragt. Das mineralisch isolierte Kabel 22 ist mittels einer Schweiß- oder Hartlötverbindung 23 hermetisch dauerbtriebsfest dicht und mechanisch fest am Trägerkörper 2' angeordnet.

Durch diese vorstehend beschriebene Ausgestaltung kann sichergestellt werden, dass auf die funktionalen Elemente 4a, 4b, 4a', 4b' sowie auf das zumindest teilweise kristallisierte Glas 3, 3' von außerhalb der Trägerkörper 1, 1' nahezu keine Kräfte einwirken und auch Druckunterschiede zwischen Äußeren und dem Inneren der Trägerköper 1, 1' im Wesentlichen keinen Einfluss auf die funktionalen Elemente 4a, 4b, 4a', 4b' sowie auf das zumindest teilweise kristallisierte Glas 3, 3' haben.

Hierdurch muss der jeweils aus Trägerkörper 1, 1', den funktionalen Elementen 4a, 4b, 4a', 4b' und aus dem zumindest teilweise kristallisierte Glas 3, 3' bestehende Verbund innerhalb seines Betriebstemperaturbereichs im Wesentlichen, dies bedeutet bis auf durch Temperaturunterschiede bedingte Änderungen des Innendrucks innerhalb der Trägerkörper 1, 1' sowie durch thermische Ausdehnungsunterschiede bedingte Schub- oder Zugkräfte, nahezu keinen erhöhten mechanischen sowie Druckbelastungen standhalten, denn die jeweils innerhalb des Trägerkörpers 1, 1' angeordneten funktionalen Elementen 4a, 4b, 4a', 4b' und das zumindest teilweise kristallisierte Glas 3, 3' sind durch die vorstehend beschriebene Anordnung gegenüber dem Äußeren der Trägerkörper 1, 1' hermetisch abgedichtet und gegenüber mechanischen Einwirkungen abgeschirmt.

Auch die Kupferleiter 24 und 25 des mineralisch isolierten Kabels 18 sowie die Kupferleiter 26 und 27 des mineralisch isolierten Kabels 22, welche jeweils mittels einer Krimpverbindung 28, 29 und 30, 31 oder durch Hartlöten mit den funktionalen Elemente 4a, 4b und 4a', 4b' verbunden sind, üben über den gesamten Betriebstemperaturbereich durch deren thermisches Ausdehnungsverhalten nur sehr geringe Zug- oder Schubkräfte auf die funktionalen Elemente 4a, 4b und 4a', 4b' aus, welche nicht zu einer spürbaren mechanischen Belastung und somit nicht zu einem die Hermetizität beeinträchtigenden Aufbrechen der jeweiligen Verbindung zu dem zumindest teilweise kristallisierten Glas 3, 3'führen.

Eine derartige Anordnung kann wesentlich höhere Betriebstemperaturen bereitstellen, da die von dem zumindest teilweise kristallisierten Glas aufzubringenden Haltekräfte wesentlich geringer sein müssen, insbesondere nicht im Hochtemperaturbereich externen Auszugskräften oder externen Druckstößen standhalten müssen.

Bei einer bevorzugten Ausführungsform des Durchführungs- oder Verbindungselements, welche in den Figuren nicht dargestellt ist, mit einem Verbund eines Trägerkörpers und einem zumindest teilweise kristallisiertem Glas, ist das zumindest teilweise kristallisierte Glas in einem Abschnitt des Trägerkörpers angeordnet und kann bereits das zumindest teilweise kristallisierbare Glas den Transport akustischer und/oder elektromagnetischer Signale durch dieses hindurch in für eine Signalübertragung ausreichender Weise bereitstellen.

In höchst überraschender Weise haben sich erhebliche Verbesserungen gegenüber herkömmlichen, druckverglasten Durchgangs- oder Verbindungselementen ergeben. Es konnten überraschend insbesondere Betriebstemperaturen bis über die Inversionstemperatur des zumindest teilweise kristallisierbaren oder teilweise kristallisierten Glases 3, 3' erreicht werden. Bei der vorstehenden sowie weiteren nachfolgend noch detaillierter beschriebenen bevorzugten Ausführungsformen wurden überraschend Betriebstemperaturen von bis über 1000 °C erreicht. Vorteilhafte Höchstgrenzen, die mit der Erfindung erreichbar sind, sind etwa 950 °C, insbesondere aber auch 1000 °C, 1100 °C und/oder 1200 °C.

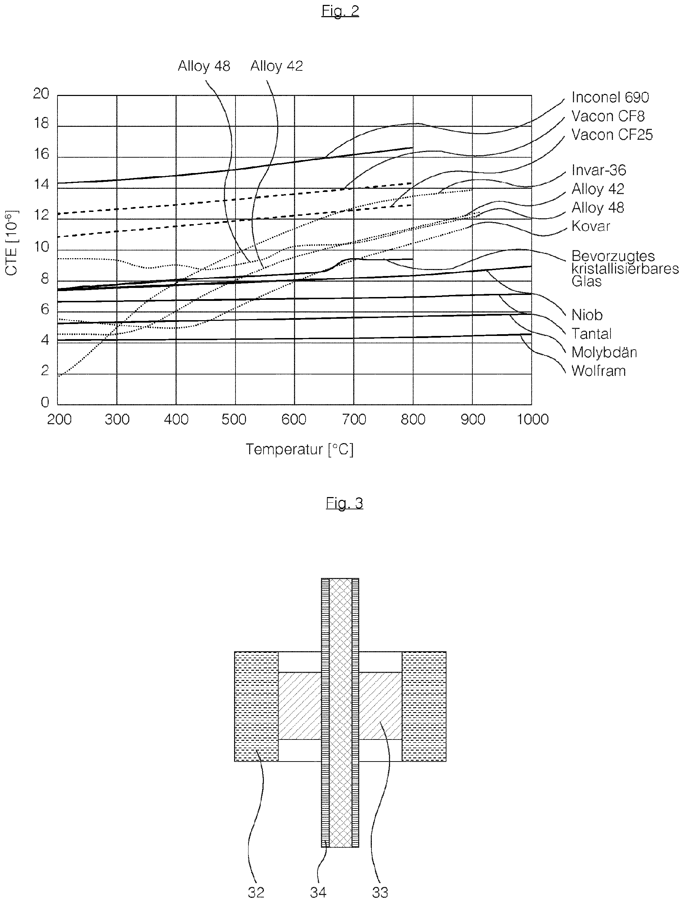

Bei herkömmlichen Druckverglasungen, wie diese beispielhaft in Figur 3 dargestellt sind, ist im Innern eines metallischen, vorzugsweise aus Stahl bestehenden Trägerkörpers 32 ein Glas 33 an diesem angeschmolzen aufgenommen und hält, ebenfalls an dieses angeschmolzen ein funktionales Element 34, hier ein zylindrisches Rohr als fluide Durchgangsverbindung, insbesondere für Helium, Wasserstoff, heiße Gase oder Flüssigkeiten, beispielsweise Kühlmedien, wie dieses auch bei den erfindungsgemäßen Ausführungsformen als funktionales Element verwendbar ist.

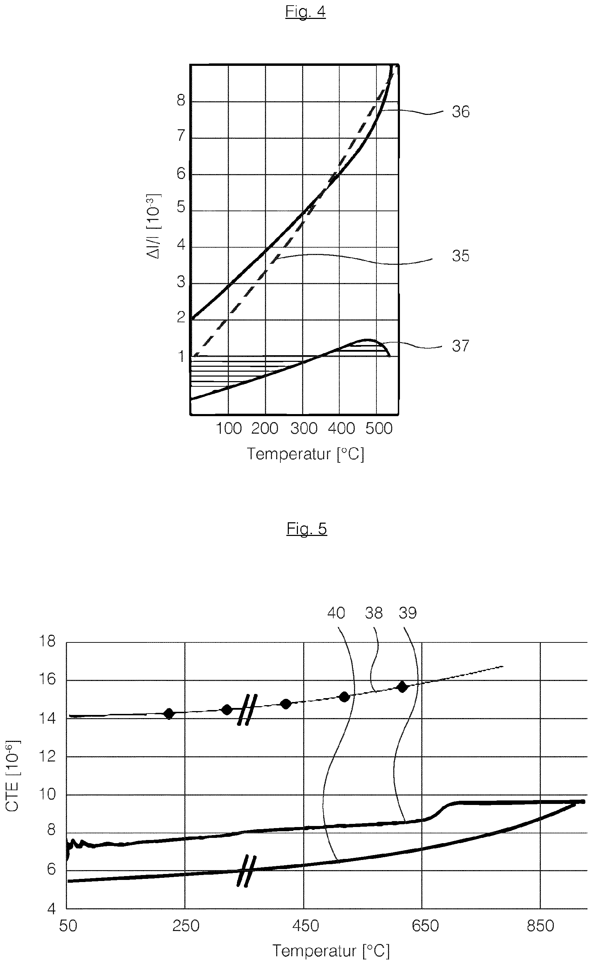

Figur 4 zeigt ein Diagramm mit der Kurve 35 der relativen thermischen Ausdehnung des Glases 33 sowie der Kurve 36 der relativen thermischen Ausdehnung des Stahls des Trägerkörpers 32 als Funktion der Temperatur für herkömmliche auf dem Markt befindliche Druckeinglasungen. Es ist zu erkennen, dass sich diese Kurven bei etwa 350 °C, schneiden, welches in etwa der Einglasungstemperatur entspricht. Diese Temperatur entspricht der aus dem Stand der Technik bekannten Inversionstemperatur.

Im unteren Teil des Diagramms der Figur 4 sind die sich aus diesen relativen thermischen Ausdehnungen ergebenden Druck- und Zugspannungen ebenfalls als Funktion der Temperatur in der Kurve 37 dargestellt.

Es ist klar zu erkennen, dass oberhalb der Temperatur, bei welcher sich die Kurven 35 und 36 schneiden, i.e. der Inversionstemperatur, die Druckspannungen in Zugspannungen übergehen, welche Kräfte auf den Verbund aus Trägerkörper 32, Glas 33 und funktionalem Element 34 ausüben, welche zu dessen Aufbrechen und einer Schädigung von dessen Hermetizität führen können und hierdurch jedenfalls die dauerbetriebsfest sichere Betriebstemperatur dieses Durchführungselements klar auf Werte unterhalb von 350 °C begrenzen.

Verwendet man nun, wie die Erfinder herausgefunden haben statt des Stahls Hochtemperaturlegierungen oder zumindest hochtemperaturfeste metallische Werkstoffe für den Trägerkörper 2, können zumindest teilweise kristallisierbare Gläser bei wesentlich höheren Temperaturen innerhalb des Trägerkörpers an diesen und am funktionalen Element 4 angeschmolzen und in diesem Zustand darüber hinaus sogar kristallisiert werden.

Zur nachfolgenden Diskussion von für den Trägerköper 2, 2'geeigneter Werkstoffe wird auf Figur 2 Bezug genommen. Figur 2 zeigt eine Darstellung des thermischen Ausdehnungskoeffitienten CTE als Funktion der Temperatur für verschiedene Metalle, metallische Legierungen, insbesondere metallische Hochtemperaturlegierungen und für ein kristallisierbares bzw. kristallisiertes Glas entsprechend der Tabelle zu Material 1, welches nachfolgend auch als das bevorzugte zumindest teilweise kristallisierbare Glas wie in Figur 2 oder auch als Material 1 bezeichnet wird.

Um die Wechselwirkung des Trägerköpers mit dem zumindest teilweise kristallisierbaren oder zumindest teilweise kristallisiertem Glas besser zu verstehen, seien zunächst auch die hierfür bevorzugten Werkstoffe benannt.

Bevorzugt ist als das zumindest teilweise kristallisierte Glas 3, 3' ein Glas oder eine Glaskeramik oder ein kristallisiertes Material auf Glasbasis mit einem spezifischen Durchgangswiderstand von mehr als 1,0 x 10¹⁰ Ω cm bei einer Temperatur von 350 °C umfasst und das Glas oder die Glaskeramik oder das kristallisierte Material auf Glasbasis in Mol-% auf Oxidbasis enthält:

| | |
|---|---|
| SiO₂ | 25 - 55 |
| B₂O₃ | 0,1 - 15 |
| Al₂O₃ | 0 - 15 |
| MO | 20 - 50 |
| M₂O | 0 - <2, |

wobei MO ausgewählt ist aus der Gruppe bestehend aus, einzeln oder in jeder beliebigen Kombination, MgO und/oder CaO und/oder SrO und/oder BaO, und M₂O ausgewählt ist aus der Gruppe bestehend aus, einzeln oder in jeder beliebigen Kombination, Li₂O und/oder Na₂O und/oder K₂O.

Besonders bevorzugt weist das zumindest teilweise kristallisierte Glas die nachfolgend angegebene Zusammensetzung auf, deren spezifischer Durchgangswiderstand ebenfalls angegeben ist:

| **Zusammensetzung [Mol-%]** | |
|---|---|
| SiO₂ | 38,7 |
| B₂O₃ | 8,9 |
| Al₂O₃ | 1,6 |
| BaO | 0,0 |
| CaO | 36,7 |
| MgO | 6,7 |
| Y₂O₃ | 3,4 |
| ZrO₂ | 4,0 |
| Spezif. Durchgangswiderstand bei 350°C [Ω cm] | 3,9 x 10¹¹ |

Alle Werte der vorstehenden Zusammensetzung dieses Materials 1 sind in Mol-% auf Oxidbasis angegeben.

Der thermische Ausdehnungskoeffitient CTE_{G} dieses zumindest teilweise kristallisierbaren Glases oder zumindest teilweise kristallisierten Glases ist in dem Diagramm der Figur 2 ebenfalls angegeben als Wert eines von der Erfindung umfassten Glases.

Aus dem Diagramm der Figur 2 ist zu erkennen, dass nur einige wenige der hochtemperaturfesten Werkstoffe einen thermischen Ausdehnungskoeffitienten CTE_{H} haben, welcher größer ist als der thermische Ausdehnungskoeffitient CTE_{G} des zumindest teilweise kristallisierbaren Glases oder zumindest teilweise kristallisierten Glases und welcher folglich geeignet ist, eine Druckspannung über den gesamten Betriebstemperatur auf das zumindest teilweise kristallisierbare Glas oder zumindest teilweise kristallisierte Glas auszuüben.

Zunächst sind alle Werkstoffe, welche nachfolgend auch als Hochtemperaturlegierungen bezeichnet werden geeignet, deren CTE über den gesamten Betriebstemperaturbereich des Durchführungs- oder Verbindungselements 1, 1' größer sind als der thermische Ausdehnungskoeffitient des zumindest teilweise kristallisierten oder kristallisierbaren Glases CTE_{G}. Als Hochtemperaturlegierungen im Sinne der Erfindung werden insbesondere metallische Werkstoffe verstanden, die bei den in der Erfindung vorgesehenen Betriebstemperaturen über 450°C, insbesondere über 700°C oder über 900 °C, noch ausreichend zäh sind, um eine Druckspannung auf das zumindest teilweise kristallisierte Glas ausüben zu können. Genereller und mit Blick auf verschiedene geeignete kristallisierbare Gläser sowie Werkstoffe für den Trägerkörper lassen sich die nachfolgenden Aussagen treffen.

Der thermische Ausdehnungskoeffitient CTE_{G} des zumindest teilweise kristallisierten Glases soll bei einer Temperatur von zumindest 20 °C bis mehr als 450 °C, bevorzugt bei einer Temperatur von zumindest 20 °C bis mehr als 550 °C, bevorzugter bei einer Temperatur von zumindest 20 °C bis mehr als 650 °C bei einer Temperatur von zumindest 10 °C bis mehr als 750° C und bevorzugter bei einer Temperatur von mehr als 900°C, vorteilhaft bei einer Temperatur von mehr als 950 °C bis auf eine Abweichung von etwa 5 % um einem Faktor F_{CTE}, welcher größer als 1,06 ist, kleiner als der thermische Ausdehnungskoeffitienten CTE_{H} der Hochtemperaturlegierung ist.

Generell sollte der Faktor F_{CTE} in einem Bereich von 1,06 bis 3,5 liegen.

Ein besonders bevorzugter Werkstoff für den Trägerkörper 2, 2' ist Inconel 690, dessen thermischer Ausdehnungskoeffitient CTE_{H} im Diagramm der Figur 2 über den gesamten Temperaturbereich die höchsten Werte aufweist und in überraschender Weise eine so gute Benetzung durch das Glas entsprechend der Tabelle zu Material 1 gestattet, dass dieses sich bei einer Temperatur von etwa 870 °C an einen aus Inconel 690 bestehenden Trägerkörper 2, 2' anschmiegen und hermetisch dicht an diesem anschmelzen kann, wobei dieser Vorgang auch als Anglasen und diese Temperatur als Anglasungstemperatur bezeichnet werden wird.

Die Erfinder haben herausgefunden, dass sich für die hier beschriebenen Ausführungsformen des Durchführungs- und Verbindungselements hervorragende Eigenschaften ergeben können, wenn die Kristallisierung des zumindest teilweise kristallisierbaren Glases nicht bei dessen Anschmelztemperatur, der Temperatur, bei welcher das zumindest teilweise kristallisierbare Ausgangsmaterial formschlüssig an zumindest einem Abschnitt des Trägerkörpers anliegt und am Trägerkörper anschmilzt und bei welcher das zumindest teilweise kristallisierbare Ausgangsmaterial formschlüssig vorzugsweise an zumindest einem Abschnitt des funktionalen Elements anliegt und vorzugsweise am funktionalen Element anschmilzt, vorgenommen wird. Vorteilhaft kann die Kristallisationstemperatur Tk höher liegen als die Anschmelztemperatur, beispielsweise bei 954 °C. Die Kristallisationstemperatur Tk kann trotz einer Anschmelztemperatur bei beispielsweise 870°C dennoch auch bei über 1000 °C liegen, beispielsweise kann die Kristallisationstemperatur Tk insbesondere bis 950 °C betragen, und bevorzugt bis zu 1000 °C oder mehr betragen, bevorzugter bis zu 1100 °C betragen, besonders bevorzugt bis zu 1200 °C betragen.

Bei geeigneter Wahl des Ausgangsmaterials des zumindest teilweise kristallisierbaren Glases kann der thermische Ausdehnungskoeffitient CTE_{G} des zumindest teilweise kristallisierten Glases auch noch bei einer Temperatur oberhalb der Inversionstemperatur innerhalb eines Temperaturintervalls, welches mehrere Grad Celsius betragen kann, konstant sein.

Beispielhafte Kristallisationszeiten können im Bereich von mehr als einer Stunde, beispielsweise bei zwei Stunden liegen.

Stellt man nun den Wert der thermischen Ausdehnungskoeffitienten CTE_{G} des zumindest teilweise kristallisierbaren bzw. zumindest teilweise kristallisierten Glases, Material 1, entsprechend der Tabelle und den Wert des thermischen Ausdehnungskoeffitienten CTE_{H} der metallischen Hochtemperaturlegierung Inconel 690 senkrecht verschoben als Funktion der Temperatur so in einem Diagramm dar, dass sich diese bei der Kristallisationstemperatur des Glases des Materials 1 von etwa 950 °C schneiden, erhält man eine ähnliche Aussage über die Druck- und Zugspannungen, wie zu Figur 4 diskutiert.

Figur 5 zeigt ein solches Diagramm, welches die tatsächliche Kurve 38 des thermischen Ausdehnungskoeffitienten CTE_{H} der metallischen Hochtemperaturlegierung Inconel 690, die Kurve 39 des thermischen Ausdehnungskoeffitienten CTE_{G} des zumindest teilweise kristallisierbaren bzw. zumindest teilweise kristallisierten Glases entsprechend der Tabelle zu Material 1 sowie die Kurve 40 des thermischen Ausdehnungskoeffitienten CTE_{H} der metallischen Hochtemperaturlegierung Inconel 690 mit dessen um einen Betrag CTE_{K} zu niedrigeren Werten verschobenen Werten, jeweils als Funktion der Temperatur zeigt, wobei der Wert CTE_{K} den thermischen Ausdehnungskoeffitienten CTE_{H} der metallischen Hochtemperaturlegierung Inconel 690 bei der Kristallisationstemperatur des kristallisierten Glases entsprechend der Tabelle zu Material 1 von etwa 950 °C angibt.

Es ist zu erkennen, dass über den gesamten in Figur 5 erkennbaren Betriebstemperaturbereich von etwa 50 °C bis mehr als 850 °C zuverlässig Druckspannungen von der Inconel 690 umfassenden Hochtemperaturlegierung auf das kristallisierte Glas ausgeübt werden können.

Es hat sich insbesondere für die hier beschriebenen Ausführungsformen gezeigt, dass wenn für die Abschirmung gegenüber Beaufschlagung mit externen mechanischen Kräften und externen Drücken geeignete Maßnahmen, wie beispielsweise die vorstehend beschriebenen getroffen werden, sogar noch höhere Betriebstemperaturen erreicht werden können, nämlich Temperaturen, die bis zu mehr als 20 % höher als die Inversionstemperatur sind.

Da das zumindest teilweise kristallisierte Glas nach dessen Kristallisierung einen weiteren Temperaturbereich oberhalb von CTE_{K} aufweist, in welchem sein thermischer Ausdehnungskoeffitient im Wesentlichen konstant ist, können Betriebstemperaturen von mehr als 900 °C, sogar bis etwa 1000 °C, und je nach Wahl des zumindest teilweise kristallisierbaren Glases und der Hochtemperaturlegierung des Trägerkörpers sogar von mehr als 1000 °C verwirklicht werden. Die maximale Betriebstemperatur kann in einem Bereich von mehr als 450°C liegen, insbesondere bis 950 °C betragen, und bevorzugt bis zu 1000 °C oder mehr betragen, bevorzugter bis zu 1100 °C betragen, besonders bevorzugt bis zu 1200 °C betragen. Im bevorzugten Fall erstreckt sich die Betriebstemperatur bis zur Erweichungstemperatur oder sogar der Schmelztemperatur des kristallisierten Glases. Diese ist wohlgemerkt eine Eigenschaft des Gesamtsystems. Wie beschrieben kann eine vorhandene amorphe Restglasphase durchaus eine geringere Erweichungstemperatur aufweisen.

Zum Herstellen der Durchführungs- und Verbindungselemente der hier beschriebenen Ausführungsformen eignet sich beispielsweise das nachfolgend beschriebene Verfahren.

Bei diesem Verfahren zum Herstellen eines Durchführungs- oder Verbindungselements werden die nachfolgend erwähnten Verfahrensschritte durchgeführt:
- Bereitstellen eines zumindest teilweise kristallisierbaren Ausgangsmaterials, insbesondere eines kristallisierbaren Glases, Bereitstellen eines Trägerkörpers, welcher ein Innenvolumen definiert, innerhalb dessen Raum für die Aufnahme weiterer Bestandteile des Durchführungs- oder Verbindungselements bereitgestellt ist,
Hierbei ist dieses Innenvolumen zumindest ein Teil des zylindrischen Trägerkörpers 2, 2' oder ein Teil des Innenraums der Trägerkörper der nachfolgend beschriebenen Ausführungsformen.
- Anordnen des zumindest teilweise kristallisierbaren Ausgangsmaterials innerhalb zumindest eines Abschnitts des Trägerkörpers, wobei dieser zumindest eine Abschnitt des Trägerkörpers innerhalb des Innenvolumens des Trägerkörpers angeordnet ist, hierbei kann das zumindest teilweise kristallisierbare Glas in Form eines Körpers bereitgestellt werden, welcher nahezu formschlüssig in den Trägerkörper 2, 2' sowie in die Trägerkörper der nachfolgend beschriebenen Ausführungsformen einbringbar ist und auch nahezu formschlüssig das funktionale Element 4 oder die funktionalen Elemente 4a, 4b, 4a', 4b' umgibt.

- Vorzugsweise Bereitstellen eines funktionalen Elements
- vorzugsweise Anordnen des funktionalen Elements, so dass zumindest ein Abschnitt des funktionalen Elements von dem zumindest teilweise kristallisierbaren Ausgangsmaterial umgeben ist, wobei die Anordnung aus zumindest teilweise kristallisierbarem Ausgangsmaterial und vorzugsweise funktionalem Element zumindest mit einem Abschnitt innerhalb des Innenvolumens des Trägerkörpers angeordnet ist,
- Erwärmen der Anordnung aus Trägerkörper, zumindest teilweise kristallisierbarem Ausgangsmaterial und vorzugsweise funktionalem Element, wobei das Erwärmen bis zu einer Temperatur durchgeführt wird, bei welcher das zumindest teilweise kristallisierbare Ausgangsmaterial formschlüssig an zumindest einem Abschnitt des Trägerkörpers anliegt und am Trägerkörper anschmilzt und bei welcher das zumindest teilweise kristallisierbare Ausgangsmaterial vorzugsweise formschlüssig an zumindest einem Abschnitt des funktionalen Elements anliegt und vorzugsweise am funktionalen Element anschmilzt,
- vorzugsweise Einstellen einer Temperatur der Anordnung aus Trägerkörper, zumindest teilweise kristallisierbarem Ausgangsmaterial und funktionalem Element, bei welcher das zumindest teilweise kristallisierbare Ausgangsmaterial zumindest teilweise kristallisiert wird,
- Abkühlen der Anordnung aus Trägerkörper, zumindest teilweise kristallisierbarem Ausgangsmaterial und funktionalem Element.

Dabei wird das Erwärmen bis zu der Temperatur vorgenommen, bei welcher das glasige, zumindest teilweise kristallisierbare oder zumindest teilweise kristallisierte Ausgangsmaterial formschlüssig an zumindest einem Abschnitt des Trägerkörpers anliegt und am Trägerkörper anschmilzt und bei welcher das glasige, zumindest teilweise kristallisierbare oder zumindest teilweise kristallisierte Ausgangsmaterial vorzugsweise auch formschlüssig an zumindest einem Abschnitt des funktionalen Elements anliegt und vorzugsweise am funktionalen Element anschmilzt.

Vorteilhaft muss durch diese Temperatur nicht auch die Temperatur T_{K} definiert werden, bei welcher das glasige Ausgangsmaterial zumindest teilweise kristallisiert wird und zum teilweise kristallisierten Glas wird und bei welcher der Trägerkörper eine Druckspannung von im Wesentlichen Null auf das zumindest teilweise kristallisierte Glas ausübt.

Wenn die Temperatur T_{K} von der Temperatur abweicht, bei welcher das zumindest teilweise kristallisierbare Ausgangsmaterial am Trägerkörper anschmilzt und bei welcher das zumindest teilweise kristallisierbare Ausgangsmaterial am funktionalen Element anschmilzt, ergeben sich hieraus weitere Freiheitsgrade bei der Verfahrensführung, welche insbesondere auch Kristallisationstemperaturen und Inversionstemperaturen erlauben, welche wesentlich höher als die vorstehend erwähnte Anschmelztemperatur sind. Hierdurch lassen sich wesentlich erhöhte Betriebstemperaturen gegenüber herkömmlichen Druckverglasungen erzielen.

Vorteilhaft kann die Kristallisationstemperatur Tk trotzt einer Anschmelztemperatur von 870 °C beispielsweise bei 954 °C liegen. Die Kristallisationstemperatur Tk kann trotz dieser Anschmelztemperatur bei beispielsweise 870°C dennoch auch bei über 1000 °C liegen, beispielsweise kann die Kristallisationstemperatur Tk insbesondere bis 950 °C betragen, und bevorzugt bis zu 1000 °C oder mehr betragen, bevorzugter bis zu 1100 °C betragen, besonders bevorzugt bis zu 1200 °C betragen.

Diese vorteilhaften Höchstgrenzen, die mit der Erfindung erreichbar sind, lassen sich bei dem hier beschriebenen Verfahren durch jeweils entsprechende Auswahl im Wesentlichen des zumindest teilweise kristallisierbaren Glases sowie der Hochtemperaturlegierung des Trägerkörpers 2 erzielen.

Für verschiedene zumindest teilweise kristallisierbare Gläser kann die Temperatur T_{K} mehr als 450 °C, bevorzugt mehr als 550 °C, bevorzugter mehr als 650 °C und noch bevorzugter mehr als 750° C und am bevorzugtesten mehr als 900 °C betragen, wobei durch jeweilige Haltezeiten bei diesen der entsprechende Kristallisationsgrad eingestellt wird.

Wie vorstehend beschrieben umfasst das bevorzugte, bei diesem Verfahren verwandte zumindest teilweise kristallisierte Glas 3 ein Glas oder eine Glaskeramik oder ein kristallisiertes Material auf Glasbasis mit einem spezifischen Durchgangswiderstand von mehr als 1,0 x 10¹⁰ Ω cm bei einer Temperatur von 350 °C und das Glas oder die Glaskeramik oder das kristallisierte Material auf Glasbasis enthält in Mol-% auf Oxidbasis:

| | |
|---|---|
| SiO₂ | 25 - 55 |
| B₂O₃ | 0,1 - 15 |
| Al₂O₃ | 0 - 15 |
| MO | 20 - 50 |
| M₂O | 0 - <2, |

wobei MO ausgewählt ist aus der Gruppe bestehend aus, einzeln oder in jeder beliebigen Kombination, MgO und/oder CaO und/oder SrO und/oder BaO, und M₂O ausgewählt ist aus der Gruppe bestehend aus, einzeln oder in jeder beliebigen Kombination, Li₂O und/oder Na₂O und/oder K₂O und umfasst der Trägerkörper eine metallische Hochtemperaturlegierung mit einem thermischen Ausdehnungskoeffitienten CTE_{H} umfasst, welcher in einem Bereich von 10 °C bis zumindest zur Temperatur T_{K} größer als der thermische Ausdehnungskoeffitienten des zumindest teilweise kristallisierten Glases CTE_{G} ist.

Bei dem vorstehend erwähnten zumindest teilweise kristallisierbaren Glas sowie bei Material 1 umfasst dessen Hauptphase Wollastonit, Zirkondioxid und Diopsid. Der thermische Ausdehnungskoeffitient CTE von Wollastonit ist der Glasphase ähnlich, derjenige von ZrO₂ ist höher. Vorteilhaft kann bei diesem Verfahren, wenn beim Einstellen der Temperatur der Anordnung aus Trägerkörper 2, zumindest teilweise kristallisierbarem Glas 3 und funktionalem Element 4, bei welcher das zumindest teilweise kristallisierbare Glas zumindest teilweise kristallisiert wird, eine Temperatur von 950 °C gewählt wird und diese Temperatur über einen Zeitraum von zwei Stunden aufrecht erhalten wird, bevor eine Abkühlung eingeleitet wird, ein Anteil an Kristallen in Gewichtsprozent von mehr als 75 % relativ zur verbleibenden glasigen Phase erhalten werden.

Ein derart kristallisiertes oder zumindest teilweise kristallisiertes Glas, insbesondere wie als für die bevorzugten zumindest teilweise kristallisierbaren Gläser erwähnt oder mit der Zusammensetzung des Materials 1 weist höchst überraschende Eigenschaften auf.

Aus Figur 2 ist bei einer Temperatur etwas oberhalb von 650 °C, bei etwa 670 °C eine Stufe im Verlauf des thermischen Ausdehnungskoeffitienten als Funktion der Temperatur zu erkennen, welche bei der Glastemperatur Tg des zumindest teilweise kristallisierten Glases, insbesondere mit der Zusammensetzung des Materials 1 oder Zusammensetzungen, die in einem Bereich wie für die bevorzugten zumindest teilweise kristallisierbaren Gläser angegebenen, liegen. Diese Stufe wird einer Restglasphase zugeschrieben, welche zeigt, dass bei der Kristallisationstemperatur und der maximalen Betriebstemperatur Tg weit überschritten ist und die glasige Phase in nicht fester sondern insbesondere in flüssiger Form vorliegen wird.

Trotzdem wird in höchst überraschender Weise die vorstehend beschriebene Druckspannung in den vorstehend beschriebenen Temperaturbereichen aufrecht erhalten und die weiche Restglasphase nicht herausgedrückt, weder durch die Druckspannung noch bei äußerer Einwirkung.

Anhand der Daten der Figur 2 wäre anzunehmen, dass sich durch das in Figur 2 mit dem Bezugszeichen 39 versehene thermische Verhalten ausreichende Festigkeiten oberhalb der Glastemperatur Tg für die Zwecke dieser Erfindung nicht erreichen lassen würden.

Bei diesem Verfahren wird während des Abkühlens der Anordnung aus Trägerkörper, glasigem, zumindest teilweise kristallisierbarem oder zumindest teilweise kristallisiertem Ausgangsmaterial und vorzugsweise funktionalem Element je nach Auswahl der Werkstoffe und Kristallisationsgrad der Trägerkörper eine Druckspannung von größer oder im Wesentlichen gleich Null bei einer Temperatur von zumindest 20 °C bis mehr als 450 °C, bevorzugt bei einer Temperatur von zumindest 20 °C bis mehr als 550 °C, bevorzugter bei einer Temperatur von zumindest 20 °C bis mehr als 650 °C und noch bevorzugter bei einer Temperatur von zumindest 10 °C bis mehr als 750° C und am bevorzugtesten bei einer Temperatur von zumindest 10°C bis mehr als 900 °C auf das zumindest teilweise kristallisierte Glas 3 ausüben.

Nach diesem Abkühlen verbleiben diese Druckspannungen in dem Verbund aus Trägerkörper, zumindest teilweise kristallisiertem Glas und vorzugsweise auch funktionalem Element dauerhaft und dauerbetriebsfest.

Bei einem derart hergestellten Durchführungs- oder Verbindungselements entspricht insbesondere die maximale Betriebstemperatur im Wesentlichen der Inversionstemperatur des Durchführungs- oder Verbindungselements mit einer Abweichung von +/- 20%, wobei bei vorstehender Verfahrensführung die Inversionstemperatur diejenige Temperatur ist, bei welcher die Druckspannung, welche der Trägerkörper auf das zumindest teilweise kristallisierte Glasmaterial ausübt, den Wert 0 annimmt und die maximale Betriebstemperatur in einem Bereich von mehr als 450°C liegt, insbesondere bis 950 °C, und bevorzugt bis zu 1000 °C oder mehr beträgt, bevorzugt bis zu 1100 °C, besonders bevorzugt bis zu 1200 °C beträgt.

Als Werkstoff für das funktionales Element eignet sich neben der vorstehend angegebenen NiFe-Legierung bzw. CF25, der FeCo-Legierung, besonders auch Beryllium-KupferLegierungen, Kovar oder Inconel, wie beispielsweise Inconel 690, Inconel 625 und weitere.

Nachfolgend werden weitere bevorzugte Ausführungsformen beschrieben, welche ebenfalls mit dem vorstehenden Verfahren herstellbar sind.

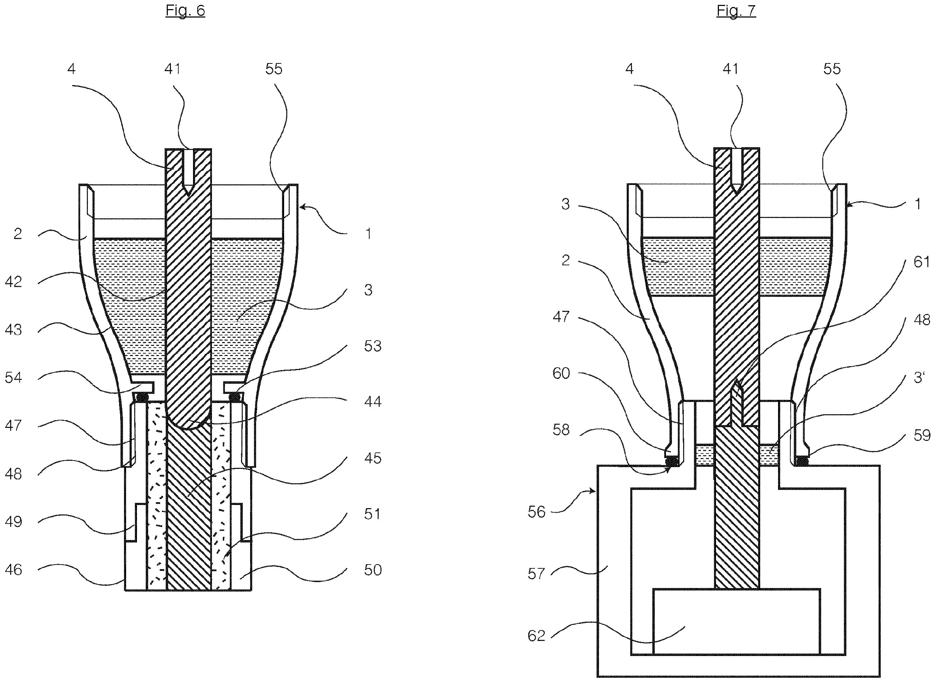

Es wird auf Figur 6 Bezug genommen, welche eine stark schematisch dargestellte Querschnittsansicht einer zweiten Ausführungsform eines Durchführungs- oder Verbindungselements zeigt, bei welchem das funktionale Element 4 einen buchsenförmigen Steckverbinder 41 umfasst. Das im Ganzen mit dem Bezugszeichen 1 bezeichnete Durchführungs- oder Verbindungselement umfasst einen Verbund mit einem eine wie vorstehend beschrieben Hochtemperaturlegierung umfassenden Trägerkörper 2, einem funktionalen Element 4 und einem zumindest teilweise kristallisiertem Glas 3, wobei das zumindest teilweise kristallisierte Glas 3 zwischen einem Abschnitt 42 des funktionalen Elements 4 und einem Abschnitt 43 des Trägerkörpers 2 angeordnet ist.

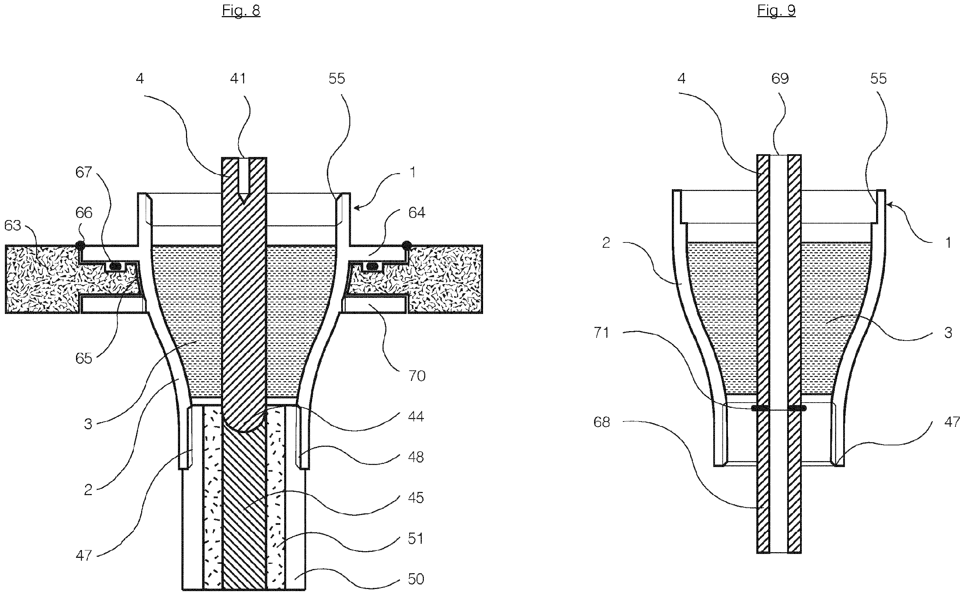

In Abweichung von dem ersten vorstehend beschriebenen Ausführungsbeispiel nimmt der Außenumfang des zumindest teilweise kristallisierten Glases 3 bei dieser Ausführungsform keine zylindrische sondern eine sich radial verjüngende Gestalt an, welche in dicht gepackten Anordnungen mit einer Vielzahl der hier beschriebenen Durchführungs- oder Verbindungselemente Vorteile bietet, wenn diese, wie beispielsweise nachfolgend unter Bezugnahme auf Figur 8 detaillierte beschrieben als Durchführung für ein Containment eingesetzt werden und weitere Verbindungen in enger Nachbarschaft hergestellt werden sollen.

An seinem dem buchsenförmigen Steckverbinder 41 gegenüberliegenden Ende ist das funktionale Element 4 mittels einer Hartlotverbindung 44 mit dem Kupferleiter 45 eines mineralisch isolierten Kabels 46 verbunden.

Dem Trägerkörper ist 2 eine Befestigungseinrichtung 47 für eine weitere Funktionsgruppe, in diesem Fall für das mineralisch isolierte Kabel 46, in Form eines Innengewindes 47 zugeordnet, welches am unterem Ende des Trägerkörpers 2 ausgebildet ist und in welches ein Außengewinde 48 einer Endhülse 49 des Kabelmantels 50 des vorzugsweise mit Magnesiumoxid als temperaturfestem Isolierstoff 51 isolierten Kabels 46 formschlüssig eingreift.

Stirnseitig presst die Endhülse 49 eine metallische Hochtemperaturdichtung 53, welche beispielsweise als gasgefüllte Ringrohrdichtung oder als einkristalline Metalldichtung ausgebildet sein kann, gegen eine Ringschulter 54 des Trägerkörpers 2, wodurch sowohl eine mechanisch feste als auch hermetisch dichte Verbindung zwischen dem Durchführungs- und Verbindungselement 1 sowie dem mineralisch isolierten Kabel 46 gebildet wird.

Anstelle der als Außengewinde 48 ausgebildeten Befestigungseinrichtung, die der weiteren, am Trägerkörper 2 angeordneten, das mineralisch isolierte Kabel 46 umfassenden Funktionsgruppe zugeordnet ist und welche mit dem Innengewinde 47, welches als Befestigungseinrichtung dem Trägerkörper 2 zugeordnet ist, verschraubt ist, können auch weitere oder alternative Formen der Befestigung wie Schweißen, Löten mit einem metallischen Lot, Hartlöten mit einem metallischen Lot, ein Glaslot Schrauben, Rasten, Nieten, Krimpen, thermisches Aufschrumpfen, chemisches Bonden verwendet werden.

Der Leiter 45 des mineralisch isolierten Kabels 46 kann für bestimmte Anwendungen vorteilhaft statt des Kupferleiters 45 oder zusätzlich zu diesem ein Thermo- oder Heizelement umfassen.

An dem buchsenförmige Steckverbinder 41 benachbarten Ende weist der Trägerkörper 2 eine Befestigungsvorrichtung für eine nochmals weitere, jedoch in Figur 6 nicht dargestellte Baugruppe in Form eines Innengewindes 55 auf.

Eine solche weitere Baugruppe kann die in Figur 1 gezeigte Anordnung mit dem im Wesentlichen zylindrischen Träger 7 und den darin angeordneten Kontaktbuchsen 6 als leicht abgewandelte Bauform umfassen und es kann alternativ zu der Überwurfmutter 13 mit Innengewinde eine entsprechend geänderte, jedoch in Figur 6 nicht dargestellte Überwurfmutter mit Außengewinde zur mechanisch festen Verbindung mit dem Verbindungselement 1 verwendet werden. Da in diesem Fall der Innenraum des Trägerköpers 1 größer wäre als in Figur 1 dargestellt, kann der Durchmesser des zylindrischen Trägers 6 ebenfalls entsprechend hierzu vergrößert sein.

Hierdurch wird ein steckverbindbares Element 41 bereitgestellt, welchem ein weiteres, mit diesem verbindbares Element 6, einer weiteren Baugruppe zugeordnet ist. Eine derartige Anordnung kann in Einsatzbereichen sinnvoll sein, in welchen zwar hohe mechanische und thermische Belastungen auftreten aber keine atmosphärischen Druckbelastungen zu erwarten sind.

Nachfolgend wird auf Figur 7 Bezug genommen, welche eine stark vereinfacht schematisch dargestellte Querschnittsansicht einer dritten Ausführungsform eines Durchführungs- oder Verbindungselements 1, mit einer mit dem Durchführungs- oder Verbindungselement stoff- und/oder formschlüssig hermetisch dicht verbunden Funktionsgruppe 56 zeigt.

Die Funktionsgruppe 56 umfasst ein Gehäuse 57, bei welchem unterhalb des Außengewindes 48 des Gehäuses 57 eine Dichtfläche 58 für eine metallische Hochtemperaturdichtung 59 ausgebildet ist, welche an deren gegenüberliegenden Ende gegen eine Ringschulter 60 des Trägerkörpers 2 hermetisch dichtend gepresst ist.

Das Gehäuse 57 der Funktionsgruppe 56 kann durch Verschrauben am Trägerköper 2 angebracht werden, wobei die zylindrische Stecker-Buchsenanordnung 61 so ausgelegt ist, dass die beim Verschrauben entstehenden Verdrehungen toleriert werden.

Hierbei dichtet der die Hochtemperaturlegierung umfassende Trägerkörper 2, der die Druckspannung auf das kristallisierte Glas 3 ausübt, die Grenzfläche zwischen Trägerkörper 2 und kristallisiertem Glas 3 hermetisch ab und die Befestigungseinrichtung, welche das Innengewinde 47, das Außengewinde 48, die Ringschulter 60, die metallische Hochtemperaturdichtung 59 und die Dichtfläche 58 am Gehäuse 56 umfasst, die Verbindung zu der das Gehäuse 57 umfassenden Funktionsgruppe hermetisch ab.

Bei dieser Ausführungsform muss das zumindest teilweise kristallisierte Glas 3' für das Gehäuse 57 nicht verwendet werden, kann jedoch bei weiteren, nachfolgend noch beschriebenen Anwendungen vorteilhaft sein.

Das Gehäuse 57 kann, wenn dieses als Sensor- und/oder Aktorgehäuse ausgebildet ist, von der rein schematischen Darstellung in Figur 7 stark abweichende Formen annehmen, welche den jeweiligen Bedingungen angepasst sein können.

Als Aktorgehäuse kann das Gehäuse 57 beispielsweise einem linearen und/oder rotatorischen Antrieb für feste und/oder fluide Medien zugeordnet sein oder diesen beherbergen.

Als Sensorgehäuse kann das Gehäuse 57 einem optischen, elektrischen, insbesondere induktiven, kapazitivem und/oder piezoelektrischen Sensor zugeordnet sein und diesen beherbergen.

Lediglich schematisch sind diese Sensoren und/oder Aktoren an der mit dem Bezugszeichen 62 versehen Baugruppe in Figur 7 zu erkennen.

Statt oder zusätzlich zu Sensoren oder Aktuatoren kann auch ein oder können eine Vielzahl von Energiespeichern im Gehäuse 57 angeordnet sein, beispielsweise als Notstromversorgung in kritischen oder potenziell gefahrbringenden Umgebungen.

Nachfolgend wird auf Figur 8 beug genommen, welche eine stark schematisch dargestellte Querschnittsansicht einer vierten Ausführungsform eines Durchführungs- oder Verbindungselements zeigt, welches in einem Containment 63 hermetisch dicht gehalten ist. Dieses Containment kann Teil der Hülle einer Einrichtung sein, in welcher beispielsweise toxische Stoffe vorkommen.

Beispielhaft zeigt auch diese Ausführungsform einen buchsenförmigen Steckverbinder 41, bei welchem ein mineralisch isoliertes Kabel an das Durchführungs- oder Verbindungselement angeschlossen ist, welches jedoch nicht hermetisch gegenüber dem Trägerkörper abgedichtet sein muss, da diese Dichtung wie nachfolgend detaillierter beschrieben durch das Containment 63 in Verbindung mit dem Trägerkörper 2 bereitgestellt wird.

Mit einer Ringschulter 64 ist der Trägerkörper 2 in einer radial-symmetrischen Ausnehmung 65 des bei dieser Ausführungsform metallischen Containments 63 angeordnet und durch eine Schweiß- oder Hartlotverbindung 66 sowohl mechanisch fest als auch hermetisch dicht am Containment 63 gehalten.

Alternativ kann bei weniger Vibrationen ausgesetzten Anwendungen die Mutter 70 eine metallische Hochtemperaturdichtung 67 hermetisch dicht zwischen der Ringschulter 64 des Trägerkörpers 2 und der radial-symmetrische Ausnehmung 65 des Containments 63 verpressen.

Bei entsprechender Dimensionierung des Außengewindes 48 des in Figur 7 dargestellten Gehäuses 57, so dass dieses in das Innengewinde 55 des Trägerkörpers 2 dieser Ausführungsform einschraubbar ist, kann dieses Gehäuse 57 als weitere Baugruppe am Durchführungselement 1 durch Verschraubung angebracht werden. Bei dieser Verwendung kann das zumindest teilweise kristallisierte Glas 3 das Gehäuse 57 hermetisch gegenüber dem Äußeren des Gehäuses 57 abdichten und mit dem vorstehend beschriebenen Verfahren im Gehäuse 57, wie für den Trägerkörper 2 beschrieben eingebracht sein.

Unter Bezugnahme auf Figur 9 wird nachfolgend die eine stark schematisch dargestellte Querschnittsansicht einer fünften Ausführungsform eines Durchführungs- oder Verbindungselements, bei welchem das funktionale Element des Durchführungs- oder Verbindungselements 1 eine Durchführung für eine Fluidverbindung 68 beziehungsweise einen elektromagnetischen Hohleiter 68 aufweist, beschrieben.

Bei dieser Ausführungsform ist an das als Hohlzylinder 69 ausgebildete funktionale Element 4, beispielsweise mittels einer Hartlotverbindung 71 eine weiterer zylindrischer Mantel angebracht, welcher aus Stahl bestehen und eine Fluidverbindung 68 oder beispielsweise auch ein elektromagnetischer Hohlwellenleiter 68 für elektromagnetische Strahlung, insbesondere für eine Hochfrequenzverbindung sein kann. Ferner kann in dieser Anordnung auch eine optische Verbindung in Form von Lichtwellenleiter angeordnet sein oder das reflektierende Innere des Hohleiters 68 einen Teil dieser Verbindung definieren.

Die vorstehend erwähnten Fluidverbindungen können Wasserstoffdurchführungen, insbesondere an Energieerzeugungseinrichtungen oder auch an Brennkraftmaschinen umfassen.

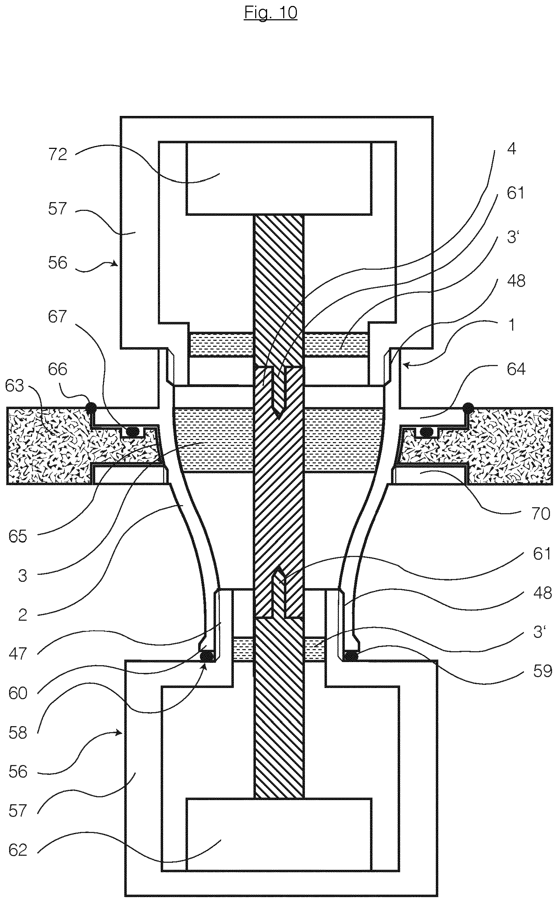

In Figur 10 ist eine stark vereinfacht schematisch dargestellte Querschnittsansicht einer sechsten Ausführungsform eines Durchführungs- oder Verbindungselements 1 gezeigt, welche in einem Containment 63 vorzugsweise hermetisch dicht gehalten ist, mit einem jeweils stirnseitigen buchsenförmigen Steckverbinder des funktionalen Elements 4 beispielsweise als Teil einer Stecker-Buchsenanordnung 61.

Bei dieser Ausführungsform ist die Messelektronik 72 in dem Gehäuse 57 der weiteren Baugruppe angeordnet, welche sich außerhalb des Containments 63 befindet. Hierdurch kann diese Messelektronik im Wesentlichen unabhängig von Strahlungen, welche eventuell innerhalb des Containments 63 auftreten, betrieben werden.

Ein innerhalb des Containments angeordneter Sensor 62 ist mit dessen Gehäuse 57 an das Durchführungs- oder Verbindungselement 1 angeschlossen ist, wodurch durch diese Anordnung ein Messgerät bereitgestellt ist, welches auch in Not- oder Störfallsituationen sicher betrieben werden und sensorische Werte aus dem Inneren des Containments 63 bereitstellen kann.

Ein derartiges Messgerät ist hochtemperaturfest, zumindest mit dessen im Containment 63 angeordneten Bestandteilen, störfallsicher, stellt hohe elektrische Isolationswiderstände bei hohen Temperaturen zur Verfügung und bieten lange Standzeiten, selbst bei extrem hohen Temperaturen.

Besonders vorteilhaft sind dabei die selbst bei sehr hohen Temperaturen bereitgestellten hohen Widerstände des bevorzugten zumindest teilweise kristallisierbaren Glases. Wie bei dieser Ausführungsform zeigen auch die weiteren hier beschriebenen Ausführungsformen elektrische Widerstandswerte, welche die in GOST R 53310-2009 "ELECTRICAL PENETRATIONS, HERMETIC INPUTS AND FEEDTHROUGHS OF POWER RAILS" geforderten Werte dauerbetriebsfest sicher überbieten.

Es zeigen die vorstehend beschriebenen Durchführungs- oder Verbindungselemente 1 generell eine hohe Sicherheit bei Störfällen, beispielsweise können die Sicherheitsanforderungen für Dampfstörfälle, bei welchen einem Dampfdruck von 10 bar bei 180 bis 200 °C stand zu halten ist, sicher erfüllt werden. Auch die erwarteten Belastungen einer Kernschmelze einer thermischen Dauerbelastung von 700 °C während mindestens 72 Stunden halten die vorstehend beschriebenen Durchführungs- oder Verbindungselemente sicher stand.

Ferner erfüllen diese Durchführungs- oder Verbindungselemente 1 auch die entsprechenden Sicherheitsvorschriften für Brandfälle, wie beispielsweise Rauchgasprüfungen. Es werden die Werte R 120/EI 60 der GOST 30247.0-94 erreicht und mit deutlich besseren Eigenschaften sogar überschritten.

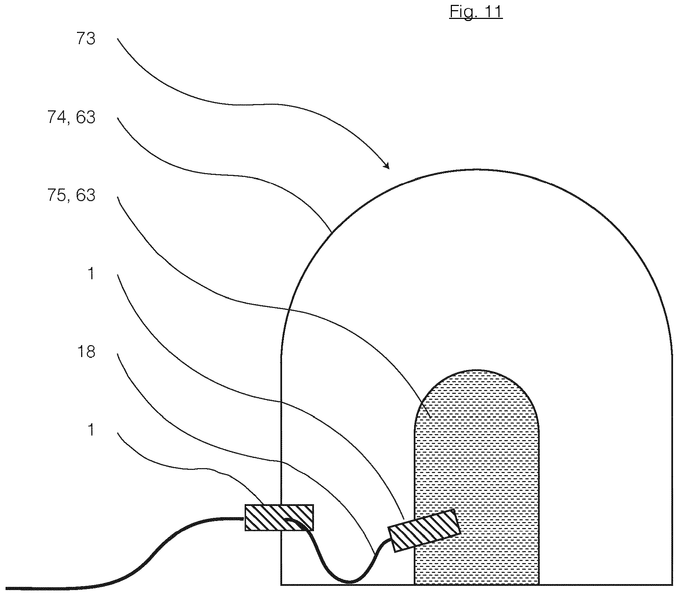

Nachfolgend wird auf Figur 11 Bezug genommen, welche eine stark vereinfacht schematisch dargestellte Querschnittsansicht einer im Ganzen mit dem Bezugszeichen 73 versehenen Energieerzeugungsvorrichtung zeigt. Die Energieerzeugungseinrichtung 73 weist ein Gehäuse 74 und eine Kapselung 75 auf. Sowohl das Gehäuse 74 als auch die Kapselung 75 bilden dabei ein Containment 63 im Sinne dieser Beschreibung der erfindungsgemäßen Ausführungsformen, bei welchem jeweils ein Durchführungs- oder Verbindungselement 1 verwendet wird, um hierdurch eine der vorstehend beschriebenen Durchführungen oder Verbindungen bereit zu stellen. Bei einer bevorzugten Ausführungsform sind die Durchführungs- oder Verbindungselemente 1 durch ein mineralisch isoliertes (MI-) Kabel 18 miteinander verbunden. Insbesondere ist das Verbindungselement 1 dazu geeignet, eine Durchführung im Primärkreislauf des Reaktors, insbesondere wie hier gezeigt Durchführungen durch den Reaktordruckbehälter z.B. zur Versorgung der Steuerstäbe mit elektrischem Strom bereit zu stellen.

Ferner umfassen weitere bevorzugte Ausführungsformen vorzugsweise Halbleiter-Chips enthaltende Sensorelemente, welche direkt auf der Glasoberfläche aufgebracht sind.

Eine besonders bevorzugte Ausführungsform umfasst beispielhaft einen Wheatstonschen Drucksensor mit einer Messbrücke und/oder einer Schicht mit einem niedrigeren thermischen Ausdehnungskoeffitienten als dem des Trägerkörpers 2, sowie eine unter dem Sensor befindlichen Durchgangsöffnung im zumindest teilweise kristallisierbaren Glas 3, durch welche Differenzdrücke sensorisch erfassbar sind.

Vorteilhaft sind bei diesen sensorischen Ausführungsformen auch die elektrischen Eigenschaften des zumindest teilweise kristallisierbaren Glases 3, welche durch hohes Isolationsvermögen die Messung verfälschende Kriechströme vermindern oder sogar vollständig unterbinden können.

Die vorstehend beschriebenen Durchführungs- oder Verbindungselemente 1 finden besonders vorteilhaft Verwendung in Umgebungen, in welcher bei Ausfall der herkömmlichen Durchführungs- oder Verbindungselemente erheblicher Schaden für Menschen und Einrichtungen entstehen kann, wie in einer Erdöl- und/oder Erdgasbohrungs- oder Explorationsvorrichtung, oder in einer Energieerzeugungs- oder Energiespeichervorrichtung mit einem Gehäuse, oder in einer Kapselung einer Energieerzeugungsvorrichtung oder einer Energiespeichervorrichtung oder eines Reaktors oder einer Speichervorrichtung von toxischer und/oder schädlicher Materie, insbesondere als Durchführungseinrichtung innerhalb des Containments eines Reaktors oder Durchführungseinrichtung durch das Containment eines Reaktors, insbesondere eines Kernreaktors, oder in einem Raumfahrzeug oder Raumfahrt-Erkundungsfahrzeug, oder in einem Gehäuse eines Sensors und/oder Aktuators.

### Bezugszeichenliste

- 1: Durchführungs- oder Verbindungselement
- 1': Durchführungs- oder Verbindungselement
- 2: Trägerkörper
- 2': Trägerkörper
- 3: zumindest teilweise kristallisierbares oder kristallisiertes Glas
- 3': zumindest teilweise kristallisierbares oder kristallisiertes Glas
- 3''': kristallisierbares Glas
- 4a: funktionales Element
- 4b: funktionales Element
- 4a': funktionales Element
- 4b': funktionales Element
- 5: Kontaktbuchse
- 6: Kontaktbuchse
- 7: im Wesentlichen zylindrischer Träger
- 8: Ringschulter
- 9: Flanschfläche
- 10: metallische Hochtemperaturdichtung
- 11: Ringnut
- 12: Stirnfläche
- 13: Überwurfmutter
- 14: Innengewinde der Überwurfmutter
- 15: Außengewinde der radialen Erweiterung des Trägerkörpers 1'
- 16: Durchgangsöffnung
- 17: Kabelmantel des MI-Kabels 18
- 18: mineralisch isoliertes Kabel
- 19: Schweiß- oder Hartlötverbindung
- 20: Durchgangsöffnung
- 21: Kabelmantel des MI-Kabels 22
- 22: mineralisch isoliertes Kabel
- 23: Schweiß- oder Hartlötverbindung
- 24: Kupferleiter des mineralisch isolierten Kabels 18
- 25: Kupferleiter des mineralisch isolierten Kabels 18
- 26: Kupferleiter des mineralisch isolierten Kabels 22
- 27: Kupferleiter des mineralisch isolierten Kabels 22
- 28: Krimp- oder Hartlotverbindung
- 29: Krimp- oder Hartlotverbindung
- 30: Krimp- oder Hartlotverbindung
- 31: Krimp- oder Hartlotverbindung
- 32: Trägerkörper
- 33: Glas
- 34: funktionales Element, zylindrisches Rohr als fluide Durchgangsverbindung
- 35: relative thermische Ausdehnung des Glases 33
- 36: relative thermische Ausdehnung des Stahls des Trägerkörpers
- 37: sich aus den relativen thermischen Ausdehnungen ergebenden Druck- und Zugspannungen
- 38: Kurve des thermischen Ausdehnungskoeffitienten CTE_{H} der metallischen Hochtemperaturlegierung Inconel 690
- 39: Kurve des thermischen Ausdehnungskoeffitienten CTE_{G} des zumindest teilweise kristallisierbaren bzw. zumindest teilweise kristallisierten Glases G018-385
- 40: Kurve des thermischen Ausdehnungskoeffitienten CTE_{H} der metallischen Hochtemperaturlegierung Inconel 690 mit dessen um einen Betrag CTE_{K} verschobenen Werten
- 41: buchsenförmiger Steckverbinder
- 42: Abschnitt des funktionalen Elements 4
- 43: Abschnitt des Trägerkörpers 2
- 44: Hartlotverbindung
- 45: Kupferleiter eines mineralisch isolierten Kabels 46
- 46: mineralisch isoliertes Kabel
- 47: Innengewinde als Befestigungseinrichtung für eine weitere Funktionsgruppe
- 48: Außengewinde der Endhülse 49 des Kabelmantels 50
- 49: Endhülse 49 des Kabelmantels 50
- 50: Kabelmantel
- 51: Magnesiumoxid als temperaturfester Isolierstoff
- 52: Innengewinde
- 53: metallische Hochtemperaturdichtung
- 54: Ringschulter des Trägerkörpers 2
- 55: Innengewinde zur Befestigung einer weiteren Baugruppe
- 56: Funktionsgruppe
- 57: Gehäuse der Funktionsgruppe 56
- 58: Dichtfläche am Gehäuse 56
- 59: metallische Hochtemperaturdichtung
- 60: Ringschulter des Trägerkörpers 2
- 61: Stecker-Buchsenanordnung
- 62: Sensoren und/oder Aktoren
- 63: Containment
- 64: Ringschulter des Trägerkörpers 2
- 65: radial-symmetrische Ausnehmung des Containments 63
- 66: Hartlotverbindung
- 67: metallische Hochtemperaturdichtung
- 68: Fluidverbindung oder Hohlleiter
- 69: Hohlzylinder
- 70: Mutter
- 71: Hartlotverbindung
- 72: Messelektronik
- 73: Energieerzeugungseinrichtung
- 74: Gehäuse
- 75: Kapselung

## Patentansprüche

1. Durchführungs- oder Verbindungselement mit
einem Verbund eines eine Hochtemperaturlegierung umfassenden Trägerkörpers (2), einem funktionalen Element (4) und einem zumindest teilweise kristallisiertem Glas (3), wobei das zumindest teilweise kristallisierte Glas (3) zwischen einem Abschnitt des funktionalen Elements (4) und einem Abschnitt des Trägerkörpers (2) oder innerhalb zumindest eines Abschnitts des Trägerkörpers angeordnet ist,
bei welchem
der die Hochtemperaturlegierung umfassende Trägerkörper (2) eine Druckspannung von größer oder im Wesentlichen gleich Null bei einer Temperatur von zumindest 20 °C bis mehr als 450 °C auf das zumindest teilweise kristallisierte Glas (3) ausübt, wobei die maximale Betriebstemperatur im Wesentlichen der Inversionstemperatur des Durchführungs- oder Verbindungselements mit einer Abweichung von +/- 20% entspricht, wobei die Inversionstemperatur diejenige Temperatur ist, bei welcher die Druckspannung, welche der Trägerkörper auf das zumindest teilweise kristallisierte Glasmaterial ausübt, den Wert 0 annimmt, und die maximale Betriebstemperatur in einem Bereich von mehr als 450°C liegt, insbesondere bis 950 °C, und bevorzugt bis zu 1000 °C oder mehr beträgt, bevorzugt bis zu 1100 °C, besonders bevorzugt bis zu 1200 °C beträgt und bei welchem der thermische Ausdehnungskoeffizient CTE_{G} des zumindest teilweise kristallisierten Glases bei einer Temperatur von zumindest 20 °C bis mehr als 450 °C bis auf eine Abweichung von etwa 5 % um einem Faktor F_{CTE}, welcher größer als 1,06 ist, kleiner als der thermische Ausdehnungskoeffizient CTE_{H} der Hochtemperaturlegierung ist.

2. Durchführungs- oder Verbindungselement nach Anspruch 1, bei welchem der die Hochtemperaturlegierung umfassende Trägerkörper (2) eine Druckspannung von größer oder im Wesentlichen gleich Null bevorzugt bei einer Temperatur von zumindest 20 °C bis mehr als 550 °C, bevorzugter bei einer Temperatur von zumindest 20 °C bis mehr als 650 °C und noch bevorzugter bei einer Temperatur von zumindest 10 °C bis mehr als 750° C und am bevorzugtesten bei einer Temperatur von zumindest 1 0°C bis mehr als 900 °C auf das zumindest teilweise kristallisierbare Glas (3) ausübt.

3. Durchführungs- oder Verbindungselement nach einem der vorstehenden Ansprüche, bei welchem der thermische Ausdehnungskoeffizient CTE_{G} des zumindest teilweise kristallisierten Glases bei einer Temperatur von zumindest 20 °C bis mehr als 550 °C, bevorzugt bei einer Temperatur von zumindest 20 °C bis mehr als 650 °C bei einer Temperatur von zumindest 10 °C bis mehr als 750° C, bevorzugter bei einer Temperatur von mehr als 900°C, vorteilhaft bei einer Temperatur von mehr als 950 °C, bis auf eine Abweichung von etwa 5 % um einem Faktor F_{CTE}, welcher größer als 1,06 ist, kleiner als der thermische Ausdehnungskoeffizienten CTE_{H} der Hochtemperaturlegierung ist.

4. Durchführungs- oder Verbindungselement nach einem der vorstehenden Ansprüche, bei welchem das zumindest teilweise kristallisierte Glas (3) ein teilweise kristallisiertes Glas ist, das zumindest eine Kristallphase und zumindest eine amorphe Restglasphase mit einer Glastransformationstemperatur Tg aufweist, wobei das Durchführungs- oder Verbindungselement im Betriebszustand und/oder im Störfall Temperaturen ausgesetzt ist, welche größer als Tg sind, wobei die zumindest eine Kristallphase das teilweise kristallisierte Glas (3) so stützt, dass es durch die Druckspannung und/oder die Umgebungsbedingungen nicht aus dem Trägerkörper herausgedrückt wird.

5. Durchführungs- oder Verbindungselement nach einem der vorstehenden Ansprüche, bei welchem das zumindest teilweise kristallisierte Glas (3) ein Glas oder eine Glaskeramik oder ein kristallisiertes Material auf Glasbasis ist mit einem spezifischen Durchgangswiderstand von mehr als 1,0 x 10¹⁰ Ω cm bei einer Temperatur von 350 °C umfasst und das Glas oder die Glaskeramik oder das kristallisierte Material auf Glasbasis in Mol-% auf Oxidbasis enthält:
| | |
|---|---|
| SiO₂ | 25 - 55 |
| B₂O₃ | 0,1 - 15 |
| Al₂O₃ | 0 - 15 |
| MO | 20 - 50 |
| M₂O | 0 - <2, |
wobei MO ausgewählt ist aus der Gruppe bestehend aus, einzeln oder in jeder beliebigen Kombination, MgO und/oder CaO und/oder SrO und/oder BaO, und M₂O ausgewählt ist aus der Gruppe bestehend aus, einzeln oder in jeder beliebigen Kombination, Li₂O und/oder Na₂O und/oder K₂O.

6. Durchführungs- oder Verbindungselement nach einem der vorstehenden Ansprüche mit einem Verbund eines eine Hochtemperaturlegierung umfassenden Trägerkörpers (2), vorzugsweise einem funktionalen Element (4) und einem zumindest teilweise kristallisiertem Glas (3), wobei das zumindest teilweise kristallisierte Glas (3) vorzugsweise zwischen einem Abschnitt des funktionalen Elements (4) und einem Abschnitt des Trägerkörpers (2) oder innerhalb zumindest eines Abschnitts des Trägerkörpers angeordnet ist,
bei welchem dem Trägerkörper (2) eine Befestigungseinrichtung für eine weitere Funktionsgruppe zugeordnet ist, wobei vorzugsweise am Trägerkörper (2) eine weitere Funktionsgruppe angeordnet ist, wobei die weitere Funktionsgruppe eine Befestigungseinrichtung aufweist, welche der am Trägerkörper (2) angeordneten Befestigungseinrichtung zugeordnet ist, und/oder wobei vorzugsweise die Befestigungseinrichtung der weiteren, am Trägerkörper (2) angeordneten Funktionsgruppe mit der Befestigungseinrichtung stoff- und/oder formschlüssig verbunden ist.

7. Durchführungs- oder Verbindungselement nach Anspruch 6, bei welchem die weitere am Trägerkörper (2) angeordnete Funktionsgruppe ein mineralisch isoliertes (MI-)Kabel (18) umfasst, wobei vorzugsweise der die Druckspannung auf das kristallisierte Glas ausübende Trägerkörper umfassend die Hochtemperaturlegierung die Grenzfläche zwischen Trägerkörper und kristallisiertem Glas hermetisch abdichtet und die Befestigungseinrichtung die Verbindung zur Funktionsgruppe hermetisch abdichtet.

8. Kombination umfassend zumindest ein Durchführungs- oder Verbindungselement nach einem der Ansprüche von 1 bis 7 sowie zumindest eine Funktionsgruppe für ein Durchführungs- oder Verbindungselement nach einem der Ansprüche von 1 bis 7 mit zumindest einem Befestigungsabschnitt, welcher dem Befestigungsabschnitt des Durchführungs- oder Verbindungselements (1) zugeordnet ist.

9. Kombination nach Anspruch 8, wobei die Funktionsgruppe umfasst zumindest ein Element aus der Gruppe, welche Mantel, Leitermantel, Sensor- und Aktorgehäuse enthält.

10. Kombination nach Anspruch 9, wobei die Funktionsgruppe umfasst Wasserstoffdurchführungen, insbesondere an Energieerzeugungseinrichtungen, insbesondere an Brennkraftmaschinen.

11. Messgerät umfassend eine Kombination gemäß einem der Ansprüche 8 bis 10..

12. Verwendung eines Durchführungs- oder Verbindungselements (1) nach einem der Ansprüche von 1 bis 7 oder einer Kombination gemäß einem der Ansprüche 8 bis 10 oder eines Messgeräts nach Anspruch 11 in einer Erdöl- und/oder Erdgasbohrungs- oder Explorationsvorrichtung, oder
in einer Energieerzeugungs- oder Energiespeichervorrichtung mit einem Gehäuse, oder
in einer Kapselung einer Energieerzeugungsvorrichtung oder einer Energiespeichervorrichtung oder eines Reaktors oder einer Speichervorrichtung von toxischer und/oder schädlicher Materie, insbesondere als Durchführungseinrichtung innerhalb des Containments eines Reaktors oder Durchführungseinrichtung durch das Containment eines Reaktors, insbesondere eines Kernreaktors, oder
in einem Raumfahrzeug oder Raumfahrt-Erkundungsfahrzeug, oder
in einem Gehäuse eines Sensors und/oder Aktuators.

13. Verfahren zum Herstellen eines Durchführungs- oder Verbindungselements nach einem der Ansprüche von 1 bis 7, umfassend die Verfahrensschritte
- Bereitstellen eines zumindest teilweise kristallisierbaren Glases, insbesondere eines zumindest teilweise kristailisierbaren oder teilweise kristallisierten Glases,
- Bereitstellen eines Trägerkörpers, welcher ein Innenvolumen definiert, innerhalb dessen Raum für die Aufnahme weiterer Bestandteile des Durchführungs- oder Verbindungselements bereitgestellt ist, wobei der Trägerkörper eine Hochtemperaturlegierung umfasst und wobei der thermische Ausdehnungskoeffizient CTE_{G} des zumindest teilweise kristallisierten Glases bei einer Temperatur von zumindest 20 °C bis mehr als 450 °C bis auf eine Abweichung von etwa 5 % um einem Faktor F_{CTE}, welcher größer als 1,06 ist, kleiner als der thermische Ausdehnungskoeffizient CTE_{H} der Hochtemperaturlegierung ist
- Anordnen des zumindest teilweise kristallisierbaren Glases innerhalb zumindest eines Abschnitts des Trägerkörpers, wobei dieser zumindest eine Abschnitt des Trägerkörpers innerhalb des Innenvolumens des Trägerkörpers angeordnet ist,
- Bereitstellen eines funktionalen Elements
- Anordnen des funktionalen Elements, so dass zumindest ein Abschnitt des funktionalen Elements von dem zumindest teilweise kristallisierbaren Glas umgeben ist, wobei die Anordnung aus zumindest teilweise kristallisierbarem Glas und funktionalem Element zumindest mit einem Abschnitt innerhalb des Innenvolumens des Trägerkörpers angeordnet ist, oder
- wobei die Anordnung aus zumindest teilweise kristallisierbarem Glas zumindest mit einem Abschnitt innerhalb des Innenvolumens des Trägerkörpers angeordnet ist,
- Erwärmen der Anordnung aus Trägerkörper, zumindest teilweise kristallisierbarem Glas und funktionalem Element, wobei das Erwärmen bis zu einer Temperatur durchgeführt wird, bei welcher das zumindest teilweise kristallisierbare Glas formschlüssig an zumindest einem Abschnitt des Trägerkörpers anliegt und am Trägerkörper anschmilzt und bei welcher vorzugsweise das zumindest teilweise kristallisierbare Glas formschlüssig an zumindest einem Abschnitt des funktionalen Elements anliegt und vorzugsweise am funktionalen Element anschmilzt,
- Einstellen einer Temperatur der Anordnung aus Trägerkörper, zumindest teilweise kristallisierbarem Ausgangsmaterial und funktionalem Element, bei welcher das zumindest teilweise kristallisierbare Ausgangsmaterial zumindest teilweise kristallisiert wird,
- Abkühlen der Anordnung aus Trägerkörper, zumindest teilweise kristallisierbarem Glas und funktionalem Element.

14. Verfahren zum Herstellen eines Durchführungs- oder Verbindungselements nach Anspruch 13, bei welchem während des Abkühlens der Anordnung aus Trägerkörper, glasigem, zumindest teilweise kristallisierbarem oder zumindest teilweise kristallisiertem Ausgangsmaterial und vorzugsweise funktionalem Element der Trägerkörper eine Druckspannung von größer oder im Wesentlichen gleich Null bei einer Temperatur von zumindest 20 °C bis mehr als 450 °C, bevorzugt bei einer Temperatur von zumindest 20 °C bis mehr als 550 °C, bevorzugter bei einer Temperatur von zumindest 20 °C bis mehr als 650 °C und noch bevorzugter bei einer Temperatur von zumindest 10 °C bis mehr als 750° C und am bevorzugtesten bei einer Temperatur von zumindest 10°C bis mehr als 900 °C auf das zumindest teilweise kristallisierte Glas (3) ausübt.

## Claims

1. A lead-through or connecting element, comprising
an assembly consisting of a carrier body (2) comprising a high-temperature alloy, a functional element (4), and an at least partially crystallized glass (3), wherein the at least partially crystallized glass (3) is arranged between a portion of the functional element (4) and a portion of the carrier body (2) or within at least one portion of the carrier body; wherein
the carrier body (2) comprising the high-temperature alloy subjects the at least partially crystallized glass (3) to a compressive stress of greater than or substantially equal to zero, at a temperature from at least 20 °C to more than 450 °C; wherein the maximum operating temperature substantially corresponds to the inversion temperature of the lead-through or connecting element, with a deviation of +/- 20 %, wherein the inversion temperature is the temperature at which the compressive stress exerted by the carrier body on the at least partially crystallized glass material assumes the value of zero, and wherein the maximum operating temperature is in a range above 450 °C, in particular up to 950 °C and preferably up to 1000 °C or more, preferably up to 1100 °C, more preferably up to 1200 °C; and wherein at a temperature from at least 20 °C to more than 450 °C, the coefficient of thermal expansion CTE_{G} of the at least partially crystallized glass is smaller than the coefficient of thermal expansion CTE_{H} of the high-temperature alloy by a factor F_{CTE} that is greater than 1.06, except for a deviation of about 5 %.

2. The lead-through or connecting element according to claim 1, wherein the carrier body (2) comprising the high-temperature alloy subjects the at least partially crystallizable glass (3) to a compressive stress of greater than or substantially equal to zero preferably at a temperature from at least 20 °C to more than 550 °C, more preferably at a temperature from at least 20 °C to more than 650 °C, and yet more preferably at a temperature from at least 10 °C to more than 750 °C, and most preferably at a temperature from at least 10 °C to more than 900 °C.

3. The lead-through or connecting element according to any one of the preceding claims,
wherein the coefficient of thermal expansion CTE_{G} of the at least partially crystallized glass is smaller than the coefficient of thermal expansion CTE_{H} of the high-temperature alloy by a factor F_{CTE} which is greater than 1.06, except for a deviation of about 5 %, at a temperature from at least 20 °C to more than 550 °C, preferably at a temperature from at least 20 °C to more than 650 °C, at a temperature from at least 10 °C to more than 750 °C, more preferably at a temperature of more than 900 °C, advantageously at a temperature of more than 950 °C.

4. The lead-through or connecting element according to any one of the preceding claims, wherein the at least partially crystallized glass (3) is a partially crystallized glass that includes at least one crystal phase and at least one amorphous residual glass phase with a glass transition temperature T_{g}, wherein in the operating state and/or in the event of an incident the lead-through or connecting element is exposed to temperatures greater than T_{g}, wherein the at least one crystal phase supports the at least partially crystallized glass (3) such that the latter is prevented from being pressed out of the carrier body by the compressive stress and/or the ambient conditions.

5. The lead-through or connecting element according to any one of the preceding claims, wherein the at least partially crystallized glass (3) is a glass or a glass ceramic or a glass-based crystallized material with a volume resistivity of more than 1.0 × 10¹⁰ Ωcm at a temperature of 350 °C, and wherein the glass or the glass ceramic or the glass-based crystallized material comprises, on an oxide basis, in mol%:
| | |
|---|---|
| SiO₂ | 25 - 55 |
| B₂O₃ | 0.1 - 15 |
| Al₂O₃ | 0 - 15 |
| MO | 20 - 50 |
| M₂O | 0 - < 2, |
wherein MO is selected from the group consisting of MgO, CaO, SrO, BaO, individually or in any combination thereof, and wherein M₂O is selected from the group consisting of Li₂O, Na₂O, K₂O, individually or in any combination thereof.

6. The lead-through or connecting element according to any one of the preceding claims, comprising an assembly consisting of a carrier body (2) comprising a high-temperature alloy, preferably a functional element (4), and an at least partially crystallized glass (3), wherein the at least partially crystallized glass (3) is preferably arranged between a portion of the functional element (4) and a portion of the carrier body (2) or within at least one portion of the carrier body;
wherein the carrier body (2) has associated therewith a fastening means for a further functional unit; wherein, preferably, a further functional unit is arranged on the carrier body (2), the further functional unit having a fastening means which is associated with the fastening means provided on the carrier body (2);
and/or wherein, preferably, the fastening means of the further functional unit arranged on the carrier body (2) is connected to the fastening means by a material bond and/or in a form-fitting manner.

7. The lead-through or connecting element according to claim 6, wherein the further functional unit arranged on the carrier body (2) comprises a mineral-insulated (MI) cable (18); wherein, preferably, the carrier body comprising the high-temperature alloy and subjecting the crystallized glass to the compressive stress hermetically seals the interface between the carrier body and the crystallized glass, and wherein the fastening means hermetically seals the connection to the functional unit.

8. A combination, comprising at least one lead-through or connecting element according to any one of claims 1 to 7 and at least one functional unit for a lead-through or connecting element according to any one of claims 1 to 7, comprising at least one fastening portion which is associated with the fastening portion of the lead-through or connecting element (1).

9. The combination according to claim 8, wherein the functional unit comprises at least one element from the group consisting of jacket, conductor sheath, sensor housing, and actuator housing.

10. The combination according to claim 9, wherein the functional unit comprises hydrogen passages, in particular in power generation systems, in particular in internal combustion engines.

11. A measuring device, comprising a combination according to any one of claims 8 to 10.

12. Use of a lead-through or connecting element (1) according to any one of claims 1 to 7, or of a combination according to any one of claims 8 to 10, or of a measuring device according to claim 11 in petroleum drilling and/or natural gas drilling or exploration equipment; or
in a power generation or energy storage system comprising a housing; or
in an encapsulation of a power generation system or an energy storage system or of a reactor or of a storage device for toxic and/or harmful matter, in particular as a lead-through means within a containment of a reactor, or as a lead-through means through the containment of a reactor, in particular a nuclear reactor; or
in a spacecraft or in a space exploration vehicle; or
in a housing of a sensor and/or an actuator,

13. A method for producing a lead-through or connecting element according to any one of claims 1 to 7, comprising the method steps of:
- providing an at least partially crystallizable glass, in particular an at least partially crystallizable or partially crystallized glass;
- providing a carrier body which defines an interior volume providing space for accommodating further components of the lead-through or connecting element, wherein the carrier body comprises a high-temperature alloy, and wherein at a temperature from at least 20 °C to more than 450 °C, the coefficient of thermal expansion CTE_{G} of the at least partially crystallized glass is smaller than the coefficient of thermal expansion CTE_{H} of the high-temperature alloy by a factor F_{CTE} that is greater than 1.06, except for a deviation of about 5 %;
- arranging the at least partially crystallizable glass within at least one portion of the carrier body, said at least one portion of the carrier body being located within the interior volume of the carrier body;
- providing a functional element;
- arranging the functional element such that at least a portion of the functional element is surrounded by the at least partially crystallizable glass, wherein said arrangement of the at least partially crystallizable starting material and the functional element is arranged within the interior volume of the carrier body, at least with a portion thereof;
- wherein said arrangement of the at least partially crystallizable glass is arranged within the interior volume of the carrier body, at least with a portion thereof;
- heating the arrangement of carrier body, at least partially crystallizable glass and functional element, wherein the heating is performed until a temperature is reached at which the at least partially crystallizable glass engages on at least a portion of the carrier body in a form-fitting manner and fuses to the carrier body, and at which the at least partially crystallizable glass preferably engages on at least a portion of the functional element in a form-fitting manner and preferably fuses to the functional element;
- adjusting a temperature of the arrangement of carrier body, at least partially crystallizable starting material and functional element, at which the at least partially crystallizable starting material at least partially crystallizes;
- cooling the arrangement of carrier body, at least partially crystallizable glass, and functional element.

14. The method for producing a lead-through or connecting element according to claim 13, wherein during the cooling of the arrangement of carrier body, glassy, at least partially crystallizable or at least partially crystallized starting material and preferably functional element, the carrier body subjects the at least partially crystallized glass (3) to a compressive stress of greater than or substantially equal to zero at a temperature from at least 20 °C to more than 450 °C, preferably at a temperature from at least 20 °C to more than 550 °C, more preferably at a temperature from at least 20 °C to more than 650 °C, and yet more preferably at a temperature from at least 10 °C to more than 750 °C, and most preferably at a temperature from at least 10 °C to more than 900 °C.

## Revendications

1. Elément de passage ou de raccordement, comprenant
un ensemble formé d'un corps support (2) comportant un alliage haute température, d'un élément fonctionnel (4) et d'un verre au moins partiellement cristallisé (3), le verre au moins partiellement cristallisé (3) étant disposé entre une partie de l'élément fonctionnel (4) et une partie du corps support (2) ou à l'intérieur d'au moins une partie du corps support,
dans lequel
le corps support (2) comportant l'alliage haute température exerce sur le verre au moins partiellement cristallisé (3) un effort de compression supérieur ou sensiblement égal à zéro, à une température allant d'au moins 20 °C à plus de 450 °C, la température de service maximale correspondant sensiblement à la température d'inversion de l'élément de passage ou de raccordement, avec un écart de +/- 20 %, la température d'inversion étant la température à laquelle l'effort de compression exercé par le corps support sur le verre au moins partiellement cristallisé adopte la valeur 0, et la température de service maximale se situant dans une plage supérieure à 450 °C, allant notamment jusqu'à 950 °C, et dont la valeur va de préférence jusqu'à 1 000 °C ou plus, de préférence jusqu'à 1 100 °C, et de manière particulièrement avantageuse jusqu'à 1 200 °C, et dans lequel le coefficient de dilatation thermique CTE_{G} du verre au moins partiellement cristallisé, à une température d'au moins 20 °C jusqu'à plus de 450 °C, à l'exception d'un écart d'environ 5 %, est inférieur d'un facteur F_{CTE}, supérieur à 1,06, au coefficient de dilatation thermique CTE_{H} de l'alliage haute température.

2. Elément de passage ou de raccordement selon la revendication 1, dans lequel le corps support (2) comportant l'alliage haute température exerce sur le verre au moins partiellement cristallisable (3) un effort de compression supérieur ou sensiblement égal à zéro, de préférence à une température allant d'au moins 20 °C à plus de 550 °C, de préférence à une température allant d'au moins 20 °C à plus de 650 °C, et de manière encore plus avantageuse à une température allant d'au moins 10 °C à plus de 750 °C, et de manière tout à fait préférée à une température allant d'au moins 10 °C à plus de 900 °C.

3. Elément de passage ou de raccordement selon l'une des revendications précédentes, dans lequel le coefficient de dilatation thermique CTE_{G} du verre au moins partiellement cristallisé, à une température d'au moins 20 °C jusqu'à plus de 550 °C, de préférence à une température allant d'au moins 20 °C à plus de 650 °C, à une température allant d'au moins 10 °C à plus de 750 °C, de manière encore plus préférée à une température de plus de 900 °C, de manière avantageuse à une température de plus de 950 °C, à l'exception d'un écart d'environ 5 %, est inférieur d'un facteur F_{CTE}, supérieur à 1,06, au coefficient de dilatation thermique CTE_{H} de l'alliage haute température.

4. Elément de passage ou de raccordement selon l'une des revendications précédentes, dans lequel le verre au moins partiellement cristallisé (3) est un verre partiellement cristallisé qui présente au moins une phase cristalline et au moins une phase vitreuse résiduelle amorphe avec une température de transformation du verre T_{g}, l'élément de passage oui de raccordement, à l'état de fonctionnement et/ou en cas de dysfonctionnement, étant exposé à des températures qui sont supérieures à T_{g}, la phase cristalline, au nombre d'au moins une, soutenant le verre partiellement cristallisé (3) de manière à ce qu'il ne soit pas pressé hors du corps support (2) par l'effort de compression et/ou les conditions ambiantes.

5. Elément de passage ou de raccordement selon l'une des revendications précédentes, dans lequel le verre au moins partiellement cristallisé (3) est un verre ou une vitrocéramique ou un matériau cristallisé à base de verre, avec une résistivité supérieure à 1,0 x 10¹⁰ Ω cm, à une température de 350 °C, et le verre ou la vitrocéramique ou le matériau cristallisé à base de verre contient, en % mol à base d'oxyde :
| | |
|---|---|
| SiO₂ | 25 à 55 |
| B₂O₃ | 0,1 à 15 |
| Al₂O₃ | 0 à 15 |
| MO | 20 à 50 |
| M₂O | 0 à <2, |
où MO est choisi dans le groupe comprenant, individuellement ou dans n'importe quelle combinaison, MgO et/ou CaO et/ou SrO et/ou BaO, et M₂O est choisi dans le groupe comprenant, individuellement ou dans n'importe quelle combinaison, Li₂O et/ou Na₂O et/ou K₂O.

6. Elément de passage ou de raccordement selon l'une des revendications précédentes, comprenant un ensemble formé d'un corps support (2), comportant un alliage haute température, de préférence d'un élément fonctionnel (4) et d'un verre au moins partiellement cristallisé (3), le verre au moins partiellement cristallisé (3) étant de préférence disposé entre une partie de l'élément fonctionnel (4) et une partie du corps support (2) ou à l'intérieur d'au moins une partie du corps support,
dans lequel un dispositif de fixation pour un autre groupe fonctionnel est associé au corps support (2), un groupe fonctionnel supplémentaire étant de préférence prévu sur le corps support (2), le groupe fonctionnel supplémentaire présentant un dispositif de fixation qui est associé au dispositif de fixation prévu sur le corps support (2), et/ou le dispositif de fixation du groupe fonctionnel supplémentaire, prévu sur le corps support (2), étant de préférence relié par adhérence et/ou par complémentarité de forme au dispositif de fixation.

7. Elément de passage ou de raccordement selon la revendication 6, dans lequel le groupe fonctionnel supplémentaire, prévu sur le corps support (2), comprend un câble (MI) (18) à isolant minéral, le corps support, qui comporte l'alliage haute température et exerce l'effort de compression sur le verre cristallisé, établissant de préférence une étanchéité hermétique de l'interface entre le corps support et le verre cristallisé, et le dispositif de fixation établissant une étanchéité hermétique avec le groupe fonctionnel.

8. Combinaison comprenant au moins un élément de passage ou de raccordement selon l'une des revendications 1 à 7 ainsi qu'au moins un groupe fonctionnel pour un élément de passage ou de raccordement selon l'une des revendications 1 à 7, comprenant au moins une partie de fixation qui est associée à la partie de fixation de l'élément de passage ou de raccordement (1).

9. Combinaison selon la revendication 8, dans laquelle le groupe fonctionnel comporte au moins un élément du groupe comprenant une enveloppe, une gaine de conducteur, un boîtier de capteur et d'actionneur.

10. Combinaison selon la revendication 9, dans laquelle le groupe fonctionnel comprend des passages d'hydrogène, en particulier sur des dispositifs de production d'énergie, notamment des moteurs à combustion interne.

11. Appareil de mesure comprenant une combinaison selon l'une des revendications 8 à 10.

12. Utilisation d'un élément de passage ou de raccordement (1) selon l'une des revendications 1 à 7 ou d'une combinaison selon l'une des revendications 8 à 10 ou d'un appareil de mesure selon la revendication 11, dans un dispositif de forage ou d'exploration de pétrole et/ou de gaz naturel, ou
dans un dispositif de production d'énergie ou de stockage d'énergie, comprenant un boîtier, ou
dans une enveloppe antidéflagrante d'un dispositif de production d'énergie ou d'un dispositif de stockage d'énergie ou d'un réacteur ou d'un dispositif de stockage de matières toxiques et/ou nocives,
en particulier en tant que dispositif de passage à l'intérieur de l'enceinte de confinement d'un réacteur, ou dispositif de passage à travers l'enceinte de confinement d'un réacteur, en particulier d'un réacteur nucléaire, ou
dans un véhicule spatial ou un véhicule d'exploration spatial, ou dans un boîtier d'un capteur et/ou d'un actionneur.

13. Procédé de fabrication d'un élément de passage ou de raccordement selon l'une des revendications 1 à 7, comprenant les étapes de procédé suivantes :
- mise à disposition d'un verre au moins partiellement cristallisable, en particulier d'un verre au moins partiellement cristallisable ou partiellement cristallisé,
- mise à disposition d'un corps support qui définit un volume interne dans lequel un espace est fourni pour accueillir d'autres composants de l'élément de passage ou de raccordement, le corps support comportant un alliage haute température, et le coefficient de dilatation thermique CTE_{G} du verre au moins partiellement cristallisé, à une température d'au moins 20 °C jusqu'à plus de 450 °C, à l'exception d'un écart d'environ 5 %, étant inférieur d'un facteur F_{CTE}, supérieur à 1,06, au coefficient de dilatation thermique CTE_{H} de l'alliage haute température,
- mise en place du verre au moins partiellement cristallisable dans au moins une partie du corps support, ladite partie, au nombre d'au moins une, du corps support étant disposée dans le volume interne du corps support,
- mise à disposition d'un élément fonctionnel,
- mise en place de l'élément fonctionnel, de sorte qu'au moins une partie de l'élément fonctionnel est entourée par le verre au moins partiellement cristallisable, l'ensemble formé de verre au moins partiellement cristallisable et de l'élément fonctionnel étant disposé au moins avec une partie dans le volume interne du corps support, ou
- l'ensemble constitué de verre au moins partiellement cristallisable étant disposé au moins avec une partie dans le volume interne du corps support,
- chauffage de l'ensemble formé du corps support, du verre au moins partiellement cristallisable et de l'élément fonctionnel, le chauffage étant effectué jusqu'à une température à laquelle le verre au moins partiellement cristallisable est appliqué avec complémentarité de forme contre au moins une partie du corps support et fond sur le corps support, et à laquelle le verre au moins partiellement cristallisable est de préférence appliqué avec complémentarité de forme contre une partie de l'élément fonctionnel et fond de préférence sur l'élément fonctionnel,
- réglage d'une température de l'ensemble formé du corps support, du matériau de départ au moins partiellement cristallisable et de l'élément fonctionnel, à laquelle le matériau de départ au moins partiellement cristallisable est cristallisé au moins en partie,
- refroidissement de l'ensemble formé du corps support, du verre au moins partiellement cristallisable et de l'élément fonctionnel.

14. Procédé de fabrication d'un élément de passage ou de raccordement selon la revendication 13, selon lequel, pendant le refroidissement de l'ensemble formé du corps support, du matériau de départ vitreux, au moins partiellement cristallisable ou au moins partiellement cristallisé, et, de préférence, de l'élément fonctionnel, le corps support exerce sur le verre au moins partiellement cristallisé (3) un effort de compression supérieur ou sensiblement égal à zéro, à une température allant d'au moins 20 °C à plus de 450 °C, de préférence à une température allant d'au moins 20 °C à plus de 550 °C, de manière plus préférable à une température allant d'au moins 20 °C à plus de 650 °C, et de manière encore plus avantageuse à une température allant d'au moins 10 °C à plus de 750 °C, et de manière tout à fait préférable à une température allant d'au moins 10 °C à plus de 900 °C.
